# EUROPEAN PATENT APPLICATION

(11) **EP 4 801 153 A1**
(43) Date of publication of application: **02.09.2026**
(21) Application number: 24933285.9
(22) Date of filing: 02.04.2024
(51) Int. Cl.: H04W 72/0446, H04W 72/04, H04L 5/16

(54) **TIME DOMAIN RESOURCE CONFIGURATION METHOD, BASE STATION, AND UE**

(71) Applicant: New H3C Technologies Co., Ltd., Hangzhou, Zhejiang 310052 (CN)
(72) Inventor: KONG, Lei, Beijing 100102 (CN); ZHOU, Lei, Beijing 100102 (CN); ZHANG, Jun, Beijing 100102 (CN)
(74) Representative: IPAZ
(86) International application number: PCT/CN2024/085507
(87) International publication number: WO 2025/208325

(57) **Abstract**

A time domain resource configuration method, a base station, and a UE. The method is applied to a base station, and comprises: sending first RRC signaling to a UE, wherein TDD-UL-DL-ConfigCommon in the first RRC signaling comprises a TDD frame structure pattern and an SBFD pattern; the TDD frame structure pattern is used for configuring a TDD frame structure; the SBFD pattern is used for configuring an SBFD time domain resource and carries a first parameter and a second parameter; the first parameter represents a period of the SBFD time domain resource; and the second parameter represents a time domain position of the SBFD time domain resource in the TDD frame structure or the TDD frame structure pattern. By applying the present application, SBFD time domain resources can be configured, realizing SBFD communication between a base station and a UE.time domain resourcetime domain resourcetime domain resourcetime domain resourcetime domain resource

## Description

### Technical Field

The present disclosure relates to the field of communication technology, in particular to a time domain resource configuration method, base station, and UE.

### Background

In the development and evolution of mobile communication, it has always been the goal of mobile communication to improve the overall system throughput and to reduce the user plane latency. FD (Full-Duplex) communication is considered to be a feasible technical solution. FD communication can send and receive data at the same time, that is to perform DL (DownLink) and UL (UpLink) data transmission, which can double the system throughput and reduce the air interface user plane latency. SBFD (Sub-Band Full Duplex) is a feasible scheme to realize FD.

Therefore, it is necessary to provide a time domain resource configuration method for SBFD to realize SBFD communication.

### Summary

The objective of examples of the present disclosure is to provide a time domain resource configuration method, base station, and UE to realize the configuration of an SBFD time domain resource. The specific technical solution is as follows:
In the first aspect, an example of the present disclosure provides a time domain resource configuration method applied to a base station, the method comprises:
sending a first radio resource control RRC signaling to a user equipment UE;
wherein a Time Division Duplex - UpLink - DownLink - Common Configuration TDD-UL-DL-ConfigCommon in the first RRC signaling includes a Time Division Duplexing TDD frame structure pattern and a Sub-Band Full Duplex SBFD pattern, the TDD frame structure pattern is to configure a TDD frame structure, and the SBFD pattern is to configure an SBFD time domain resources and carries a first parameter and a second parameter, the first parameter represents a period of the SBFD time domain resource, and the second parameter represents a time-domain position of the SBFD time domain resource in the TDD frame structure or the TDD frame structure pattern.

In the second aspect, an example of the present disclosure provides a time domain resource configuration method applied to a user equipment UE, the method comprises:
receiving a first radio resource control RRC signaling sent by a base station;
wherein a Time Division Duplex - UpLink - DownLink - Common Configuration TDD-UL-DL-ConfigCommon in the first RRC signaling comprises: a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter represents a period of the SBFD time domain resource, and the second parameter represents a time-domain position of the SBFD time domain resource in the TDD frame structure or the TDD frame structure pattern;
configuring the TDD frame structure and the SBFD time domain resource according to the TDD frame structure pattern, the SBFD pattern, the first parameter and the second parameter.

In the third aspect, an example of the present disclosure provides a time domain resource configuration apparatus applied to a base station, the apparatus comprises:
a first signaling sending module, for sending a first radio resource control RRC signaling to a user equipment UE;
wherein a Time Division Duplex - UpLink - DownLink - Common Configuration TDD-UL-DL-ConfigCommon in the first RRC signaling includes a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter represents a period of the SBFD time domain resources, and the second parameter represents a time-domain position of the SBFD time domain resource in the TDD frame structure or the TDD frame structure pattern.

In the fourth aspect, an example of the present disclosure provides a time domain resource configuration apparatus applied to a user equipment UE, the apparatus comprises:
a first signaling receiving module, for receiving a first radio resource control RRC signaling sending by a base station;
wherein a Time Division Duplex - UpLink - DownLink - Common Configuration TDD-UL-DL-ConfigCommon in the first RRC signaling comprises: a Time Division Duplexing TDD frame structure pattern and a Sub-Band Full Duplex SBFD pattern, the TDD frame structure pattern is to configure a TDD frame structure, and the SBFD pattern is to configure an SBFD time domain resources and carries a first parameter and a second parameter, the first parameter represents a period of the SBFD time domain resources, and the second parameter represents a time-domain position of the SBFD time domain resource in the TDD frame structure or the TDD frame structure pattern;
a first resource configuration module, for configuring the TDD frame structure and the SBFD time domain resource according to the TDD frame structure pattern, the SBFD pattern, the first parameter and the second parameter.

In the fifth aspect, an example of the present disclosure provides a base station, the base station comprises:
a processor;
a transceiver;
a machine readable storage medium, which stores machine executable instructions that can be executed by the processor; the machine executable instructions prompt processor to perform the following blocks:
   sending a first radio resource control RRC signaling to a user equipment UE;
   wherein a Time Division Duplex - UpLink - DownLink - Common Configuration TDD-UL-DL-ConfigCommon in the first RRC signaling includes a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter represents a period of the SBFD time domain resource, and the second parameter represents a time-domain position of the SBFD time domain resource in the TDD frame structure or the TDD frame structure pattern.

In the sixth aspect, an example of the present disclosure provides a user equipment UE, which includes:
a processor;
a transceiver;

A machine readable storage medium, which stores machine executable instructions that can be executed by the processor; the machine executable instructions cause processor to perform the following blocks:
receiving a first radio resource control RRC signaling sent by a base station;
wherein a Time Division Duplex - UpLink - DownLink - Common Configuration TDD-UL-DL-ConfigCommon in the first RRC signaling comprises: a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter represents a period of the SBFD time domain resource, and the second parameter represents a time-domain position of the SBFD time domain resource in the TDD frame structure or the TDD frame structure pattern;
configuring the TDD frame structure and the SBFD time domain resource according to the TDD frame structure pattern, the SBFD pattern, the first parameter and the second parameter.

In the seventh aspect, an example of the present disclosure provides a machine readable storage medium that stores machine executable instructions that, when called and executed by a processor, cause the processor to implement the method according to any one of the first aspect or the second aspect.

In the eighth aspect, an example of the present disclosure provides a computer program product that causes the processor to implement the method according to any one of the first aspect or the second aspect.

The beneficial effects of the example of the present disclosure are as follows:
In the solution provided by the examples of the present disclosure, the base station sends the cell-level first RRC signaling to the UE. The first RRC signaling includes the first parameter and the second parameter of the SBFD. Since the first parameter can represent the period of the SBFD time domain resources, the second parameter can represent the time-domain position of the SBFD time domain resources in the TDD frame structure, after receiving the first RRC signaling, the UE can configure the SBFD time domain resource based on the first parameter and the second parameter, to achieve SBFD communication between the base station and the UE.

### Brief Description of the Drawings

In order to provide a clearer explanation of examples of the present disclosure or technical solutions in the prior art, a brief introduction will be given to the drawings required in the description of the examples or prior art. It is obvious that the drawings in the following description are only some examples of the present disclosure. Other examples can be obtained by those of ordinary skills in the art based on these drawings without any creative effort.
Figure 1 is a schematic diagram of a frame structure provided by an example of the related art;
Figure 2 is a schematic diagram of a flow of a time domain resource configuration method provided by an example of the present disclosure;
Figure 3 is a schematic diagram of a first SBFD time domain resource provided by an example of the present disclosure;
Figure 4 is a schematic diagram of a second SBFD time domain resource provided by an example of the present disclosure;
Figure 5 is a schematic diagram of a third SBFD time domain resource provided by an example of the present disclosure;
Figure 6 is a schematic diagram of a fourth SBFD time domain resource provided by an example of the present disclosure;
Figure 7 is a schematic diagram of a fifth SBFD time domain resource provided by an example of the present disclosure;
Figure 8 is a schematic diagram of a flow of another time domain resource configuration method provided by an example of the present disclosure;
Figure 9 is a schematic structural diagram of a time domain resource configuration apparatus provided by an example of the present disclosure;
Figure 10 is a schematic structural diagram of a base station provided in an example of the present disclosure;
Figure 11 is a schematic structural diagram of the of a UE provided in an example of the present disclosure;

### Detailed Description

The technical solutions in the examples of the present disclosure will be clearly and completely described below with reference to the accompanying drawings in the examples of the present disclosure. Obviously, the described examples are only some, but not all, of the examples of the present disclosure. Based on the examples in the present disclosure, all other examples obtained by those of ordinary skills in the art without making creative effort fall within the protection scope of the present disclosure.

In order to realize the integration function of communication and perception of a base station, the base station needs to send packets to achieve the communication function, and need to receive the perception packets at the same time to achieve the perception function. Therefore, the base station needs to be able to send and receive packets at the same time. That is, it needs to have the ability of FD communication. However, FD communication will introduce additional SI (Self Interference), inter cell crosstalk, inter user interference and other factors that affect the communication quality, among which the SI is the most severe. In order to cancel SI, related art need to combine RF (Radio Frequency) passive SI cancellation, analog domain active SI cancellation and digital domain active SI cancellation to ensure the performance of full duplex communication. However, from the perspective of practical applications, the above SI cancellation technologies will correspondingly increase the complexity of base stations and user terminals. Therefore, it needs to not only cancel SI, but also reduce the complexity of base stations and user terminals while implementing FD. In this case, SBFD is a feasible scheme to realize FD.

Firstly, the configuration of an SBFD time domain resource in current related art is described. In 5G (5th Generation Mobile Communication Technology) system, TDD (Time Division Duplex) frame structure is divided into a UL slot, a DL slot and an S slot based on slots. Wherein, a symbol in the S slot can be configured as a UL symbol, a DL symbol and an F (Flexible) symbol. The F symbol can be used as a UL symbol, a DL symbol or a GP (Guard Period) symbol.

The base station can inform the UE of the configured TDD frame structure through the semi static configuration mode via RRC (Radio Resource Control) signaling. RRC signaling can include TDD-UL-DL-ConfigCommon (Time Division Duplex - UpLink - DownLink - ConfigurationCommon) or TDD-UL-DL-ConfigDedicated (Time Division Duplex - UpLink - DownLink - ConfigurationDedicated). The former can configure a cell level TDD frame structure, and the latter can configure a UE specific TDD frame structure for a specific UE. In TDD-UL-DL-ConfigCommon, it can configure up to two TDD frame structure patterns. Each TDD frame structure pattern can configure the period of the TDD frame structure, and each symbol in the TDD frame structure can be specifically configured as a DL symbol, a UL symbol or an F symbol. If there is a TDD frame structure pattern, the TDD frame structure pattern configures the TDD structure directly. If there are two TDD frame structure patterns, the two TDD frame structure patterns can jointly configure the overall frame structure of TDD.

The period of the TDD frame structure is configured through the dl-UL-TransmissionPeriodicity (DownLink-UpLink- TransmissionPeriodicity) parameter in the TDD frame structure pattern. If there is a TDD frame structure pattern, the period of the TDD frame structure is the period configured in the TDD frame structure pattern, which can be represented by P1. If there are two TDD frame structure patterns, the period of the TDD frame structure is a sum of periods configured in the two TDD frame structure patterns, and P1+P2 can represent the sum of the periods. P1 and P2 are the periods configured in the two TDD frame structure patterns respectively.

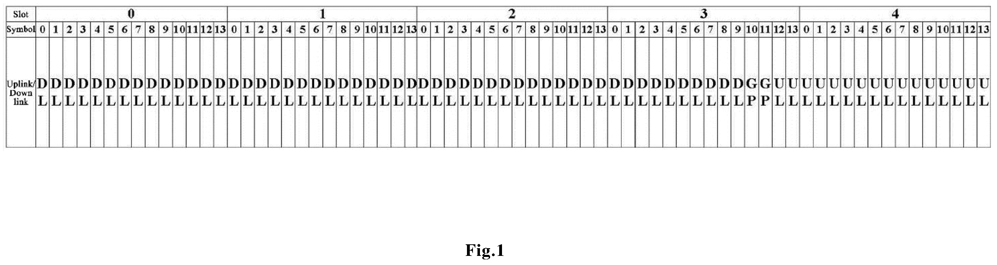

Figure 1 is a schematic diagram of a frame structure provided by an example of the related art.

The figure includes 5 slots from 0 to 4, and each slot includes 14 symbols from 0 to 13. DL in the figure indicates that the corresponding symbol is a DL symbol for transmitting downlink data, and UL in the figure indicates that the corresponding symbol is a UL symbol for transmitting uplink data. Slot 3 in the figure is an S slot. The 0-9 symbols in the S slot are configured as DL symbols, the 12-13 symbols are configured as UL symbols, and the 10-11 symbols are configured as F symbols, which are used as GP symbols for uplink and downlink switching. The ratio of uplink and downlink in the figure is about 1:4.

In addition, the base station can further change the F symbol configured in TDD-UL-DL-ConfigCommon through a parameter contained in TDD-UL-DL-ConfigDedicated, and can further configure it as a DL symbol or a UL symbol.

On this basis, in the current 3GPP (3rd Generation Partnership Project) standardization process, the following conclusions about SBFD time domain resource configuration are made:
For a UE in a RRC connection mode, an SBFD time domain resource is configured in one period. When at least one TDD frame structure pattern is configured, the period of the SBFD time domain resource can be selected from the following options:
Option 1: the period of the SBFD time domain resource is the same as that of the TDD frame structure configured through dl-UL-TransmissionPeriodicity in TDD-UL-DL-ConfigCommon.
Option 2: the period of the SBFD time domain resource is an integer multiple greater than 1 of the period of the TDD frame structure configured through dl-UL-TransmissionPeriodicity in TDD-UL-DL-ConfigCommon.

As can be seen from above, the specific time-domain position of the SBFD time domain resource in the period of the TDD frame structure is not clearly specified in the above scheme, so the above scheme cannot be directly applied to a FD communication system. Moreover, with respect to the specific configuration mode of SBFD time domain resource configuration, there exist problems such as how to resolve time domain resource conflicts, which are not clearly defined. Therefore, an example of the present disclosure. Provides a time domain resource configuration method.

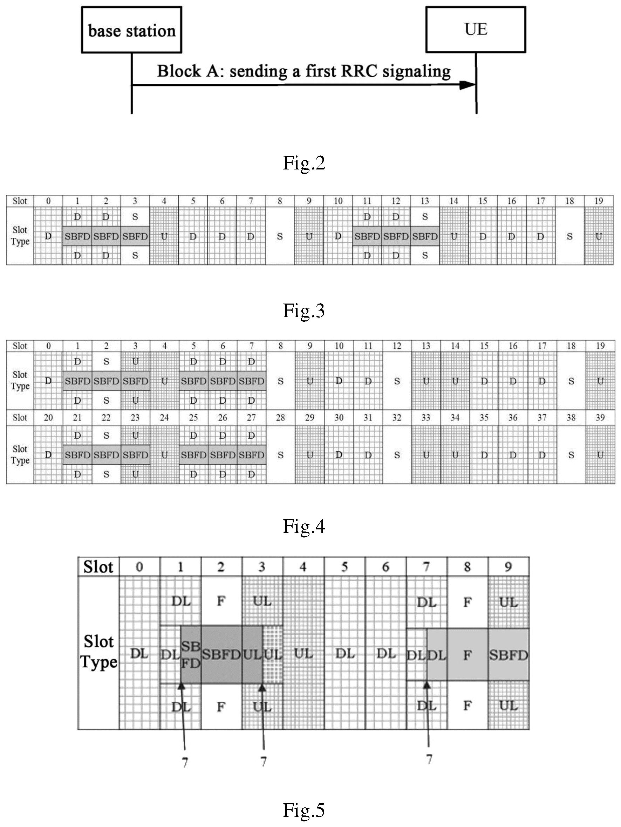

In one example of the present disclosure, referring to Figure 2, which is a flowchart of a time domain resource configuration method provided in an example of the present disclosure. A UE in a cell is uniformly configured through the following block A to achieve the configuration of semi-static SBFD time domain resource at the cell level.
block A: a base station sending a first RRC signaling to a UE.

Wherein a TDD-UL-DL-ConfigCommon in the first RRC signaling comprises: a TDD frame structure pattern and an SBFD pattern, the TDD frame structure pattern is to configure a TDD frame structure, and the SBFD pattern is to configure an SBFD time domain resource and carries a first parameter and a second parameter, the first parameter representing a period of the SBFD time domain resource, the second parameter representing a time-domain position of the SBFD time domain resource in the TDD frame structure or the TDD frame structure pattern.

In the example of the present disclosure, the SBFD pattern is a structure, and the first parameter and/or the second parameter may be included in the SBFD pattern. In addition, the first parameter and the second parameter can also be dispersed and configured in TDD-UL-DL-ConfigCommon. At this point, TDD-UL-DL-ConfigCommon can actually exclude the SBFD pattern, and it can be considered that the SBFD pattern is not explicitly configured in TDD-UL-DL-ConfigCommon. The relationship between the first parameter and the second parameter and the SBFD pattern is explained in details in the following text, and will not be elaborated here.

In addition, the number of SBFD patterns cannot exceed the number of TDD frame structure patterns contained in TDD-UL-DL-ConfigCommon. Since the maximum number of TDD frame structure patterns specified in the current protocol is 2, the maximum number of SBFD patterns is 2.

In the solution provided by the example of the present disclosure, thee base station sends a cell-level first RRC signaling to the UE. The first RRC signaling includes the first parameter and the second parameter of SBFD. Since the first parameter can represent the period of the SBFD time domain resource, the second parameter can represent the time-domain position of the SBFD time domain resource in the TDD frame structure, after receiving the first RRC signaling, the UE can configure the SBFD time domain resource based on the first parameter and the second parameter, to achieve SBFD communication between the base station and the UE.

There are three cases regarding the corresponding relationship between an SBFD pattern and a TDD frame structure:
One SBFD pattern corresponds to one TDD frame structure pattern, one SBFD pattern corresponds to two TDD frame structure patterns, and the two SBFD patterns correspond to two TDD frame structure patterns, respectively.

Therefore, there are two solutions for configuring the SBFD pattern:
The first solution: an SBFD pattern corresponds one-to-one to a TDD frame structure pattern. It includes one SBFD pattern corresponds to one TDD frame structure pattern, and the two SBFD patterns correspond to two TDD frame structure patterns, respectively.

The second solution: one SBFD pattern corresponds to two TDD frame structure patterns.

Below is an explanation of the first parameter included in TDD-UL-DL-ConfigCommon. The period of the SBFD time domain resource represented by the first parameter should be an integer multiple of the period of the TDD frame structure. If configured as a non-integer multiple, it will cause a mismatch between the period of the SBFD time domain resource and the period of the TDD frame structure. This will result in the unavailability of SBFD symbols, thereby reducing the overall performance of the SBFD system.

For example, when the period of the TDD frame structure is configured as 2.5ms, the period of the SBFD time domain resource can be configured as 2.5ms, 5ms, 10ms, 20ms, 40ms, 80ms, 160ms, or the like, but cannot be configured as other values. When the period of the TDD frame structure is configured as 1ms, the period of the SBFD time domain resource can be configured as 2ms, 4ms, 5ms, 8ms, 10ms, 16ms, 20ms, 32ms, 40ms, 64ms, 80ms, 128ms, 160ms, or the like.

There are two options for configuring the first parameter, which is the period of the SBFD time domain resource.

Option a: directly specifying the period of the SBFD time domain resource.

In Option a, the period of the SBFD time domain resource is configured by configuring the first parameter to a preset period. In this case, the first parameter is an optional parameter and can only be configured when the SBFD time domain resource need to be configured. The preset period can be 0.5ms, 0.625ms, 1ms, 1.25ms, 2ms, 2.5ms, 4ms, 5ms, 8ms, 10ms, 16ms, 20ms, 32ms, 40ms, 64ms, 80ms, 128ms, 160ms, or the like. If the preset period continues to expand, the preset period is an integer multiple of 128ms and 160ms.

For example, as applicable to a scenario where µ_{ref}=0,1,2,3,5,6, and subcarrier spacing SCS = 15KHz * 2^{µ_{ref}} the period can be 4ms, 8ms, 16ms, 32ms, 40ms, 64ms, 80ms, 128ms, 160ms, or the like. In this case, the first parameter sbfdPeriodicity (SBFD period) configured can be illustrated as:
sbfdPeriodicity ENUMERATED [ms0p5, ms0p625, ms1, ms1p25, ms2, ms2p5, ms4, ms5, ms8, ms10, ms16, ms20, ms32, ms40, ms64, ms80, ms128, ms160,...} optional.

Option b: specifying the relationship between the period of the SBFD time domain resource and the period of the TDD frame structure.

In Option b, the first parameter is to specify the multiple relationship between the period of the SBFD time domain resource and the period of the TDD frame structure. In this case, the first parameter is optional. If not configured, then the period of the SBFD time domain resource is the same as the period of the TDD frame structure by default. If configured, it indicates the multiple between the period of the SBFD time domain resource and the period of the TDD frame structure.

For example, in this case, the first parameter can be represented as sbfdPeriodicityFactor (SBFD periodicity factor). Its values can be 2, 3, 4, 5, 6, 7, 8, or the like, or 2, 4, 5, 8, 10, 16, 20, or the like. The present disclosure does not limit specific values.

There are different ways to configure the first parameter for option a and option b. The following will provide specific descriptions of different examples.

The first parameter is in the form of: a value of the period or a specific value of a multiple between the period and a TDD frame structure period.

In one example of the present disclosure, the TDD-UL-DL-ConfigCommon comprises one TDD frame structure pattern and one SBFD pattern that correspond to each other, and the period represented by the first parameter is: a first integer multiple of the period configured in the TDD frame structure pattern.

The first parameter is in the form of: a value of the period or a specific value of the first integer multiple.

In the case where the first parameter is in the form of the value of the period, the first parameter is sbfdPeriodicity, represented by P_{sbfd}, which is an integer multiple of the period of the TDD frame structure configured in the TDD frame structure pattern. If the period of the TDD frame structure is denoted as P, the first parameter can be represented as *P_{sbfd}* = *aP*, wherein *a* is the specific value of the first integer multiple.

In one example of this disclosure, the TDD-UL-DL-ConfigCommon includes one SBFD pattern, which corresponds to one TDD frame structure pattern, and the first parameter is included in the SBFD pattern.

In the case where the first parameter is in the form of the value of the period and the first parameter is included in the SBFD pattern, an example of TDD-UL-DL-ConfigCommon in the first RRC signaling is:

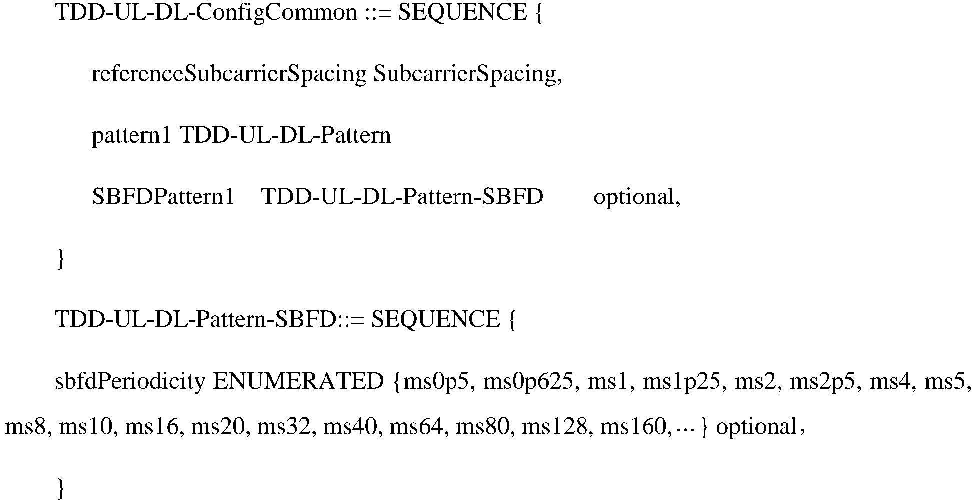

In the case where the first parameter is in the form of the specific value of the first integer multiple and the first parameter is included in the SBFD pattern, an example of SBFD pattern in the first RRC signaling is:

```
     TDD-UL-DL-Pattern-SBFD::= SEQUENCE {
     sbfdPeriodicityFactor ENUMERATED {2,4,5,8,10,16,20,...} optional,
     }
```

wherein, sbfdPeriodicityFactor is the specific value of the first integer multiple.

In addition, SBFD patterns can be implicitly configured in TDD-UL-DL-ConfigCommon, and the first parameter is directly included in TDD-UL-DL-ConfigCommon.

Specifically, in the case where the first parameter is in the form of the value of the period and the first parameter is directly included in the TDD-UL-DL-ConfigCommon, an example of TDD-UL-DL-ConfigCommon in the first RRC signaling is:

```
     TDD-UL-DL-ConfigCommon ::= SEQUENCE {
        referenceSubcarrierSpacing SubcarrierSpacing,
        sbfdPeriodicity ENUMERATED {ms0p5, ms0p625, ms1, ms1p25, ms2, ms2p5, ms4,
 ms5, ms8, ms10, ms16, ms20, ms32, ms40, ms64, ms80, ms128, ms160,...} optional,
        pattern1 TDD-UL-DL-Pattern
     }
```

In the case where the first parameter is in the form of the specific value of the first integer multiple and the first parameter is directly included in the TDD-UL-DL-ConfigCommon, an example of the SBFD pattern in the first RRC signaling is:

```
     TDD-UL-DL-ConfigCommon ::= SEQUENCE {
        referenceSubcarrierSpacing SubcarrierSpacing,
        sbfdPeriodicityFactor ENUMERATED {2,4,5,8,10,16,20,...} optional,
        pattern1 TDD-UL-DL-Pattern
     }
```

Refer to Figure 3, which is a schematic diagram of a first SBFD time domain resource provided by an example of the present disclosure.

The figure contains 20 Slots (slots) from Slot0-Slot19, and the Slot Types include D, S, and U. Every five slots in the figure represent a TDD frame structure. For example, Slot0-Slot4 is the first TDD frame structure, Slot5-Slot9 is the second TDD frame structure, and so on. In this example, there is only one TDD frame structure, which can be represented as DDDSU. That is, the slots in the TDD frame structure are a D slot, a D slot, a D slot, an S slot, and a U slot in sequence. The SCS is 30KHZ, and the TDD frame structure has a period of 2.5ms.

The SBFD in the figure represents the SBFD time domain resource, which is allocated in the middle three slots of the TDD frame structure. The period of the SBFD time domain resource represented by the first parameter is twice the period of the TDD frame structure, which is 5ms.

In another example of the present disclosure, the TDD-UL-DL-ConfigCommon includes two TDD frame structure patterns and two SBFD patterns that correspond to each other one-to-one. The period represented by the first parameter is a second integer multiple of a sum of periods configured in the two TDD frame structure patterns.

Wherein, the first parameter is in the form of: a value of the period or a specific value of the second integer multiple.

Specifically, in the case where TDD-UL-DL-ConfigCommon contains two TDD frame structure patterns and two SBFD patterns that correspond one to one, the first parameter is configured within the SBFD pattern. The value of the period represented by the first parameter is P_{sbfd} + P_{sbfd2}. P_{sbfd} is the second integer multiple of the period of one TDD frame structure, and P_{sbfd2} is the second integer multiple of the period of another TDD frame structure.

At this point, in the case where the first parameter is in the form of the value of the period, an example of TDD-UL-DL-ConfigCommon in the first RRC signaling is:

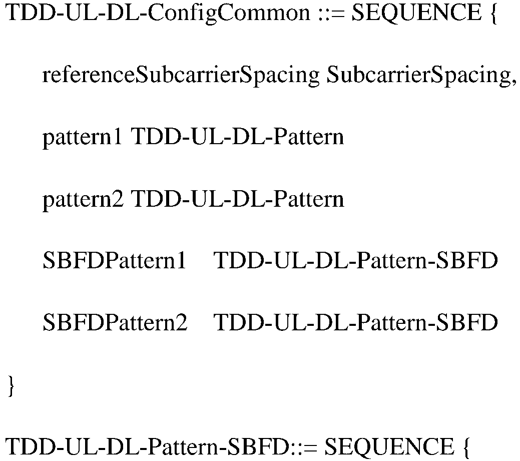

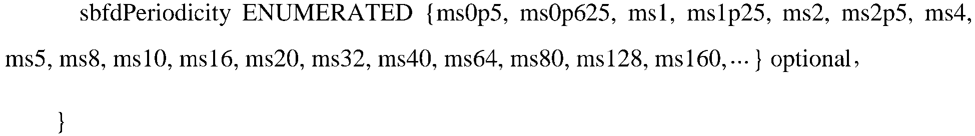

In the case where the first parameter is in the form of the specific value of the second integer multiple, an example of TDD-UL-DL-ConfigCommon in the first RRC signaling is:

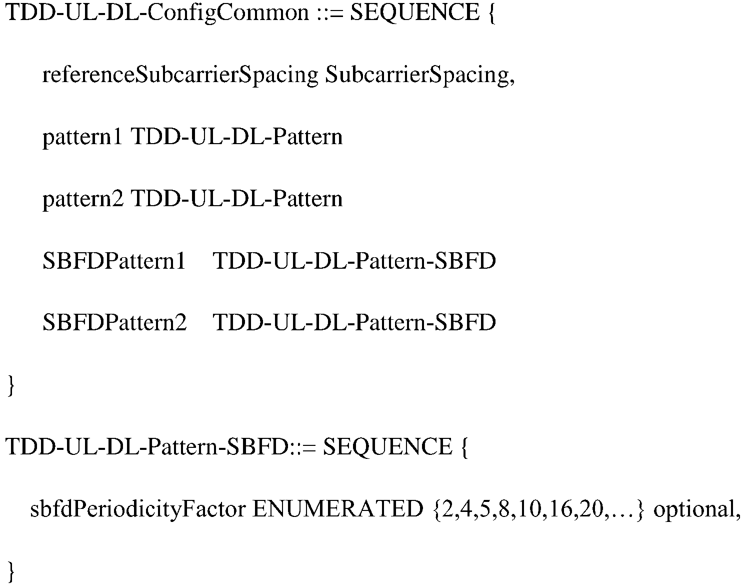

Refer to Figure 4, which is a schematic diagram of a second SBFD time domain resource provided by an example of the present disclosure.

The figure contains 40 Slots (slots) from Slot0-Slot39, and the Slot Types include D, S, and U. Every five slots in the figure represent a TDD frame structure pattern. For example, Slot0-Slot4 is a first TDD frame structure pattern, Slot5-Slot9 is a second TDD frame structure pattern, and Slot0-Slot9 together form a TDD frame structure, and so on. There are two types of TDD frame structure patterns in this example. The TDD frame structure patterns can be represented as DDSUU and DDDSU, respectively. The slots in the first TDD frame structure pattern are a D slot, a D slot, an S slot, a U slot, and a U slot in sequence. The slots in the second TDD frame structure pattern are a D slot, a D slot, a D slot, an S slot, and a U slot in sequence. The SCS is 30KHZ. The TDD frame structure has a period of 5ms.

The SBFD in the figure represents the time domain resource of SBFD. There are two SBFD patterns corresponding to the two TDD frame structure patterns respectively. The two SBFD patterns are configured with two SBFD time domain resources. The two SBFD time domain resources are located in the two TDD frame structure patterns. The first SBFD time domain resource is allocated in the middle three slots of the first TDD frame structure pattern. The second SBFD time domain resource is allocated in the first three slots of the second TDD frame structure pattern. The period of the SBFD time domain resources is twice the period of the TDD frame structure, which is 10ms. That is to say, there are two SBFD time domain resources in each interval of two TDD frame structures.

In another example of the present disclosure, the TDD-UL-DL-ConfigCommon includes one SBFD pattern and two TDD frame structure patterns. The SBFD pattern corresponds to the two TDD frame structure patterns, and the SBFD pattern is to configure the SBFD time domain resources. The period represented by the first parameter is a third integer multiple of a sum of periods configured in the two TDD frame structure patterns.

In one example of the present disclosure, the first parameter is in the form of: a value of the period or a specific value of the third integer multiple.

In one example of the present disclosure, the first parameter is included in the SBFD pattern;
or
the first parameter is included in the TDD-UL-DL-ConfigCommon.

In the case where the first parameter is the preset third period, the first parameter is sbfdPeriodicity, represented by P_{shfd}, which is an integer multiple of the sum of the periods of the two TDD frame structures configured in the two TDD frame structure patterns. If the periods of two TDD frame structures are denoted as P and *P*₂ respectively, the period of the SBFD time domain resource can be expressed as *P_{sbfd}* = *b*(*P* + *P*₂). Wherein, b is the specific value of the third integer multiple.

In the case where the first parameter takes a value of the value of the period and the first parameter is included in the SBFD pattern, an example of TDD-UL-DL-ConfigCommon in the first RRC signaling is:

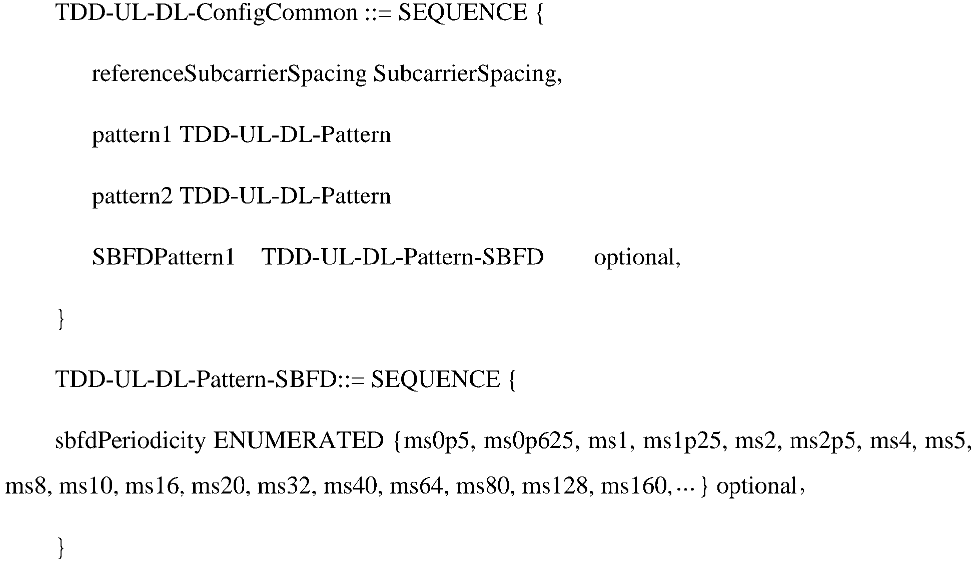

In the case where the value of the first parameter is the specific value of the third integer multiple, and the first parameter is included in the SBFD pattern, sbfdPeriodicityFactor is the specific value of the third integer multiple. The SBFD pattern in the first RRC signaling can be represented as:

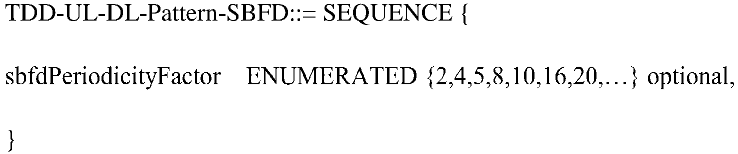

In addition, the SBFD patterns can be implicitly configured in TDD-UL-DL-ConfigCommon, and the first parameter is directly included in TDD-UL-DL-ConfigCommon.

Specifically, in the case where the first parameter takes a value of the value of the period and the first parameter is directly included in the TDD-UL-DL-ConfigCommon, an example of TDD-UL-DL-ConfigCommon in the first RRC signaling is:

```
     TDD-UL-DL-ConfigCommon ::= SEQUENCE {
        referenceSubcarrierSpacing SubcarrierSpacing,
        sbfdPeriodicity ENUMERATED {ms0p5, ms0p625, ms1, ms1p25, ms2, ms2p5, ms4,
 ms5, ms8, ms10, ms16, ms20, ms32, ms40, ms64, ms80, ms128, ms160,...} optional,
        pattern1 TDD-UL-DL-Pattern
        pattern2 TDD-UL-DL-Pattern
     }
```

In the case where the first parameter takes a value of the specific value of the third integer multiple, and the first parameter is directly included in the TDD-UL-DL-ConfigCommon, sbfdPeriodicityFactor is the specific value of the third integer multiple. One example of the SBFD pattern in the first RRC signaling is:

```
     TDD-UL-DL-ConfigCommon ::= SEQUENCE {
        referenceSubcarrierSpacing SubcarrierSpacing,
        sbfdPeriodicityFactor ENUMERATED {2,4,5,8,10,16,20,...} optional,
        pattern1 TDD-UL-DL-Pattern
        pattern2 TDD-UL-DL-Pattern
     }
```

In another example of the present disclosure, the second parameter represents a time-domain position of one or two SBFD time domain resources in the TDD frame structure or the TDD frame structure pattern.

Specifically, in the case where the SBFD pattern contained in TDD-UL-DL-ConfigCommon corresponds one-to-one to the TDD frame structure pattern, the SBFD time domain resource is located in the TDD frame structure pattern. In the case where one SBFD pattern contained in TDD-UL-DL-ConfigCommon corresponds to two TDD frame structure patterns, the SBFD time domain resource is located in the TDD frame structure.

If there is one set of second parameters, one or two SBFD time domain resources can be configured. If there are two sets of second parameters, each set of second parameters can be configured with one or two SBFD time domain resources, and a total of 2-4 SBFD time domain resources can be configured for both sets of second parameters.

In one example of the present disclosure, if the TDD-UL-DL-ConfigCommon includes one SBFD pattern and two TDD frame structure patterns, the SBFD time domain resource represented by the second parameter is located within the range of the TDD frame structure configured by the two TDD frame structure patterns;
If the SBFD pattern contained in the TDD-UL-DL-ConfigCommon corresponds one-to-one to the TDD frame structure pattern, then the SBFD time domain resource represented by the second parameter is located within the range of the TDD frame structure pattern.

If there is one set of second parameters and one TDD frame structure pattern, the SBFD time domain resource configured by the second parameter is located within the TDD frame structure configured by the TDD frame structure pattern. If the length of the SBFD time domain resource has gone beyond the range of the TDD frame structure, the part that has gone beyond is invalid.

If there are two sets of second parameters and two TDD frame structure patterns, the SBFD time domain resource configured by each set of second parameters is located in the TDD frame structure pattern corresponding to the SBFD pattern to which this set of second parameters belongs. If the length of the SBFD time domain resource has gone beyond the range of the TDD frame structure pattern where it is located, the part that has gone beyond is invalid.

If there is one set of second parameters and two TDD frame structure patterns, the SBFD time domain resource configured by the second parameter can cross the TDD frame structure pattern and be located at any position in the TDD frame structure configured by the two TDD frame structure patterns. But if the SBFD time domain resource has gone beyond the range of TDD frame structure, the part that has gone beyond is invalid.

Furthermore, if there is only one set of second parameters in TDD-UL-DL-ConfigCommon, the second parameter can be included in one SBFD pattern within TDD-UL-DL-ConfigCommon. The second parameter can also be excluded from the SBFD pattern. In this case, the SBFD pattern can be configured implicitly in TDD-UL-DL-ConfigCommon.

If there are two sets of second parameters in TDD-UL-DL-ConfigCommon, the second parameters are respectively included in the two SBFD patterns in TDD-UL-DL-ConfigCommon.

In one example of the present disclosure, the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource.

Alternatively, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern; in the case where one SBFD pattern corresponds to two TDD frame structure patterns, the fifth parameter represents a position of an ending symbol of the SBFD time domain resource in the TDD frame structure.

If the second parameter includes both the third parameter and the fourth parameter, it represents that the consecutive symbols from the position represented by the third parameter until the length of the fourth parameter belong to the SBFD time domain resource.

If the second parameter includes the third parameter and the fifth parameter, it represents all symbols from the position represented by the third parameter to the position represented by the fifth parameter belong to the SBFD time domain resource.

In addition, whether the first parameter contains the third parameter and the fourth parameter, or the third parameter and the fifth parameter, a pair of parameters must exist in pairs.

In one example of the present disclosure, the third parameter is the order of the starting symbol in the symbols of the TDD frame structure pattern or in the TDD frame structure from front to back or from back to front. In the case where the third parameter is in order from front to back, the starting symbol is the front-end symbol from front to back. In the case where the third parameter is in order from back to front, the starting symbol is the front-end symbol from back to front.

On this basis, the second parameter above represents the time-domain position of one SBFD time domain resource in the TDD frame structure or the TDD frame structure pattern, and includes a third parameter of one SBFD time domain resource. In this case, the third parameter of the SBFD time domain resource is the order of the starting symbol of the SBFD time domain resource in the TDD frame structure or the TDD frame structure pattern from front to back.

Alternatively, the second parameter represents the time-domain position of two SBFD time domain resources in the TDD frame structure or the TDD frame structure pattern, and includes two sets of parameters. The second parameter includes a third parameter of a first SBFD time domain resource and a second SBFD time domain resource. The first SBFD time domain resource is located before the second SBFD time domain resource. In this case, the third parameter of the first SBFD time domain resource is the order of the starting symbol of the first SBFD time domain resource in the TDD frame structure or the TDD frame structure pattern from front to back. The third parameter of the second SBFD time domain resource is the order of the starting symbol of the second SBFD time domain resource in the TDD frame structure or the TDD frame structure pattern from back to front.

On the basis of the aforementioned example, if the second parameter is included in the SBFD pattern, the SBFD pattern corresponds one-to-one to the TDD frame structure pattern, and the second parameter represents the time-domain positions of two SBFD time domain resources in the TDD frame structure pattern, then an example of the SBFD pattern in TDD-UL-DL-ConfigCommon is: 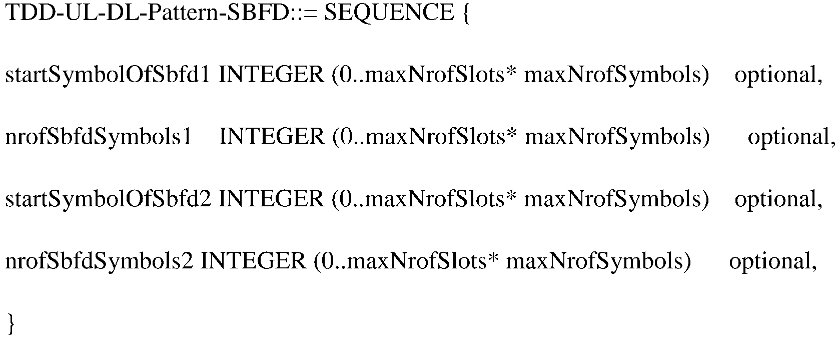 wherein, startSymbolOfSbfd1 (SBFD starting symbol 1) is the third parameter of the first SBFD time domain resource. NrofSbfdSymbols1 (number of SBFD symbols 1) is the fourth parameter of the first SBFD time domain resource. StartSymbolOfSbfd2 (SBFD starting symbol 2) is the third parameter of the second SBFD time domain resource. NrofSbfdSymbols2 (2 SBFD symbols) is the fourth parameter of the second SBFD time domain resource.

Furthermore, in one example of the present disclosure, if the first SBFD time domain resource overlaps with the second SBFD time domain resource, a priority of the first SBFD time domain resource in an overlapping part is higher than that of the second SBFD time domain resource.

That is to say, if there is an overlapping part between the configuration of the first SBFD time domain resource and the configuration of the second SBFD time domain resource in the second parameter, then the overlapping part belongs to the first SBFD time domain resource.

In another example of the present disclosure, a symbol in the first SBFD time domain resource that coincides with a traditional UL symbol is invalid.

That is to say, the configuration of the first SBFD time domain resource may only apply to a symbol in the TDD frame structure other than traditional UL symbol.

In addition, for the symbol other than traditional UL symbol, the effectiveness of the configuration of the first SBFD time domain resource can be controlled by a sixth parameter included in the TDD-UL-DL-ConfigCommon. In the case where a sixth parameter is included in the TDD-UL-DL-ConfigCommon, the sixth parameter represents whether a first symbol in a first SBFD time domain resource that coincides with a traditional DL symbol or a traditional F symbol is invalid. And/or, in the case where a sixth parameter is not included in the TDD-UL-DL-ConfigCommon, a first symbol that coincides with a traditional DL symbol or a traditional F symbol is valid.

The sixth parameter can be referred to as a first SBFD symbol configuration indicator parameter (sbfdIndicator1), and the sixth parameter is an optional parameter.

The traditional UL symbol is a UL symbol contained in the TDD frame structure, the traditional DL symbol is a DL symbol contained in the TDD frame structure, and the traditional F symbol is an F symbol contained in the TDD frame structure.

In addition, if the sixth parameter exists, in the case where the sixth parameter takes the value of a first value, the first symbol that coincides with the traditional DL symbol is valid, and the first symbol that overlaps with the traditional F symbol is invalid.

In the case where the sixth parameter takes the value of a second value, a first symbol that coincides with the traditional DL symbol is invalid, and a first symbol that coincides with the traditional F symbol is valid.

For example, the first value can be 0, and the second value can be 1. Of course, the first and second values can also be other values, and the specific values are not limited in the example of the present disclosure.

The sbfdIndicator1 can be defined as: sbfdIndicator1 ENUMERATED {0,1} optional.

For the same reason, a symbol in the second SBFD time domain resource that coincides with a traditional DL symbol is invalid.

That is to say, the configuration of the second SBFD time domain resource may only apply to a symbol in the TDD frame structure other than the traditional DL symbol.

In addition, for the symbol other than the traditional DL symbol, the effectiveness of the configuration of the second SBFD time domain resource can be controlled by a seventh parameter included in the TDD-UL-DL-ConfigCommon. In the case where a seventh parameter is included in the TDD-UL-DL-ConfigCommon, the seventh parameter represents whether a second symbol in a second SBFD time domain resource that coincides with a traditional UL symbol or a traditional F symbol is invalid. And/or, in the case where a seventh parameter is not included in the TDD-UL-DL-ConfigCommon, a second symbol that coincides with a traditional UL symbol or a traditional F symbol is valid.

The seventh parameter can be referred to as a second SBFD symbol configuration indicator parameter (sbfdIndicator2), and the seventh parameter is an optional parameter.

In one example of the present disclosure, in the case where the seventh parameter value is a third value, the second symbol that coincides with the traditional UL symbol is valid, and the second symbol that coincides with the traditional F symbol is invalid;
In the case where the seventh parameter takes the value of a fourth value, the second symbol that coincides with the traditional UL symbol is invalid, and the second symbol that coincides with the traditional F symbol is valid.

For example, the third value can be 0, and the fourth value can be 1. Of course, the third and fourth values can also be other values, and the specific values are not limited in the present disclosure.

The sbfdIndicator2 can be defined as: sbfdIndicator2 ENUMERATED {0,1} optional.

It should be noted that if there is an overlap between the first SBFD time domain resource and the second SBFD time domain resource, in the overlapping part, the priority of the sixth parameter for the first SBFD time domain resource is higher than that of the seventh parameter for the second SBFD time domain resource.

If the second parameter is included in the SBFD pattern, the SBFD pattern corresponds one-to-one to the TDD frame structure pattern, and the second parameter represents the time-domain positions of two SBFD time domain resources in the TDD frame structure pattern. An example of the SBFD pattern in TDD-UL-DL-ConfigCommon in the presence of sbfdIndicator1 and sbfdIndicator2 is:

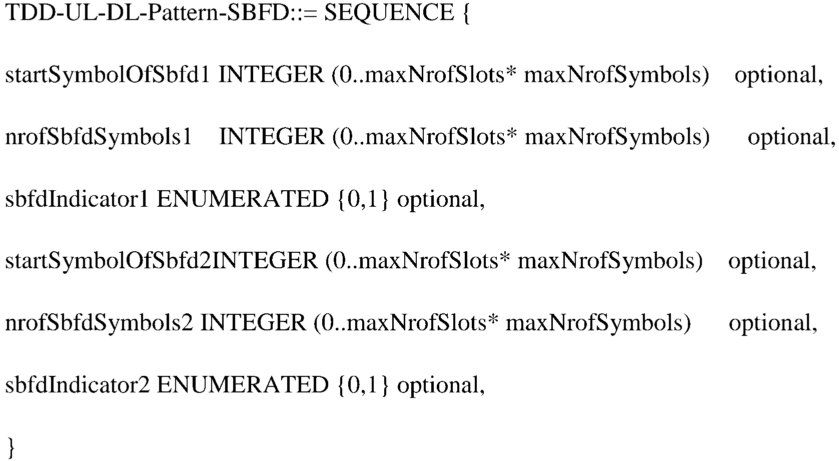

If TDD-UL-DL-ConfigCommon contains two TDD frame structure patterns and the SBFD patterns are not explicitly configured, in the presence of sbfdIndicator1 and sbfdIndicator2, an example in TDD-UL-DL-ConfigCommon is:

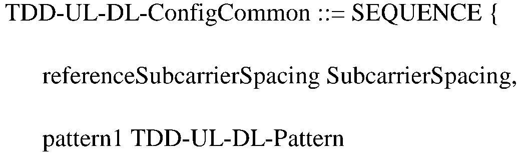

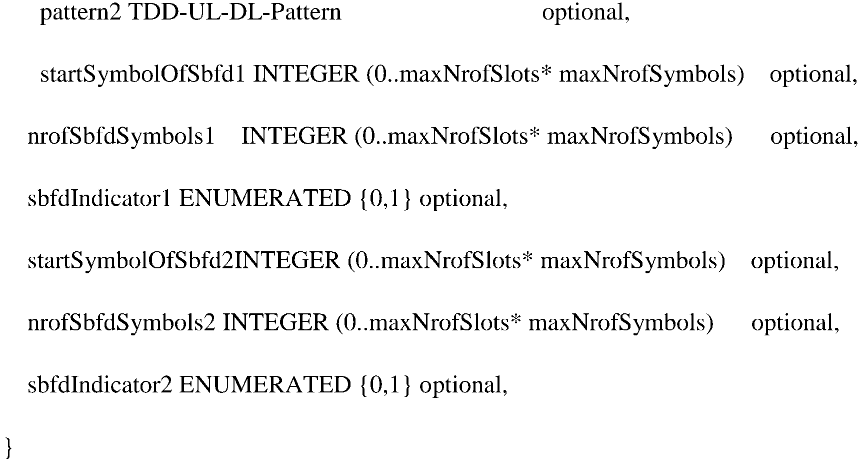

If TDD-UL-DL-ConfigCommon contains two TDD frame structure patterns and one SBFD pattern, the second parameter is included in the SBFD pattern. In the presence of sbfdIndicator1 and sbfdIndicator2, an example in TDD-UL-DL-ConfigCommon is:

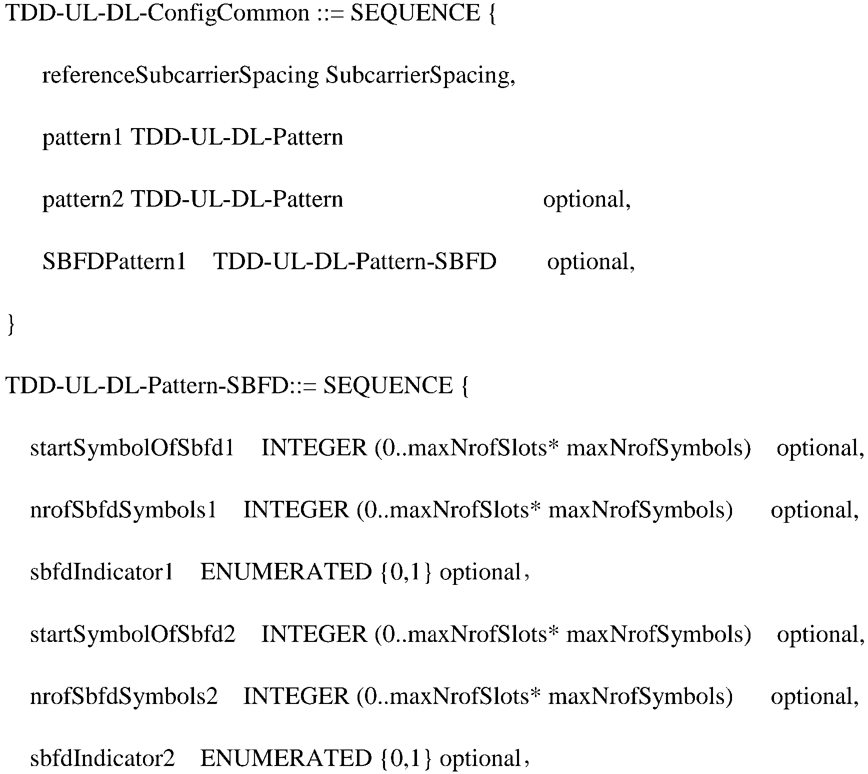

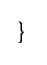

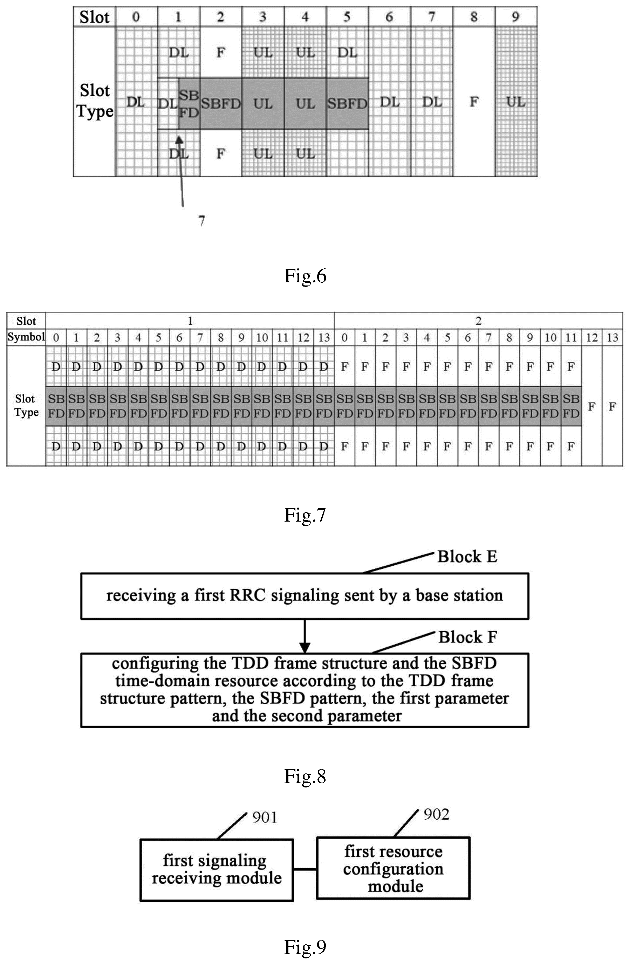

The specific examples shown in Figures 5 and 6 below describe the position of an SBFD time domain resource in a TDD frame structure pattern.

Refer to Figure 5, which is a schematic diagram of a third SBFD time domain resource provided by an example of the present disclosure.

The figure includes 10 slots from slot 0 to slot 9, and slot 0 to slot 4 is the first TDD frame structure pattern. The TDD frame structure pattern can be represented as DDSUU, which represents that the slots in the first TDD frame structure pattern are a D slot, a D slot, an S slot, a U slot, and a U slot in sequence. The D slot is configured with all DL symbols, so it is denoted by DL in the figure. The S slot is configured with all F symbols, therefore is denoted by F in the figure. The U slot is configured with all UL symbols, therefore is denoted by UL in the figure. slots 5-9 represent the second TDD frame structure, which can be denoted as DDDSU, which represents that the slots in the first TDD frame structure pattern are a D slot, a D slot, a D slot, an S slot, and a U slot in sequence. The D slot is configured with all DL symbols, so it is denoted by DL in the figure. The S slot is configured with all F symbols, therefore is denoted by F in the figure. The U-slot is configured with all UL symbols, therefore is denoted by UL in the figure. The TDD frame structure in Figure 4 has a period of 5ms. Two TDD frame structures each contain an SBFD time domain resource.

Wherein, the third parameter of the first SBFD time domain resource is: startSymbolOfSbfd1=21 (slot 0 contains 14 symbols, and slot 1 contains 7 symbols before the first SBFD time domain resource), and the fourth parameter is: nrofSbfdSymbols1 =28. Since the sbfdIndicator1 is not configured, the first SBFD time domain resource is effective in both the traditional DL symbol and the traditional F symbol, but not in traditional UL symbol (such as the first 7 symbols in slot 3).

The third parameter of the second SBFD slot resource is: startSymbolOfSbfd2=0 (the starting symbol is in the order from back to front), and the fourth parameter is: nrofSbfdSymbols2 =35, sbfdIndicator2 = 0. That is to say, the second SBFD time domain resource is only effective in the traditional UL symbol, and is not effective in both the traditional DL symbol and the traditional F symbol. For example, the last 7 symbols in slot 7 are still traditional DL symbols, and all symbols in slot 8 are still traditional F symbols.

Refer to Figure 6, which is a schematic diagram of a fourth SBFD time domain resource provided by an example of the present disclosure.

The figure includes 10 slots from 0 to 9. The TDD frame structure in Figure 6 is the same as that in Figure 4, and will not be repeated here. The TDD frame structure shown in Figure 6 contains an SBFD time domain resource.

The third parameter of SBFD time domain resource is: startSymbolOfSbfd1=21, the fourth parameter is nrofSbfdSymbols1 =63, and other parameters are not configured. That is to say, the SBFD time domain resource is effective in both the traditional DL symbol and the traditional F symbol, but not in the traditional UL symbol. For example, all symbols in slots 3 and 4 are still traditional UL symbols.

As can be seen from the above, the example of the present disclosure is configured with a conflict handling mechanism when there is an overlapping conflict between the SBFD time domain resource and the traditional slot in the TDD frame structure or the TDD frame structure pattern, and can further process the overlapping conflict by configuring the optional sixth parameter and/or the seventh parameter. For the two SBFD time domain resources configured with the second parameter, a diverse and different conflict handling mechanism is provided.

In another example of the present disclosure, the base station may also perform block B to achieve a user-level dynamic SBFD time domain resource configuration for a specific UE.

block B: sending a second RRC signaling to the UE.

Wherein, a TDD-UL-DL-ConfigDedicated in the second RRC signaling includes an eighth parameter, which is to configure symbols in certain slots of the TDD frame structure as SBFD symbols, the SBFD symbols having SBFD sub-band resources.

It should be noted that although the TDD-UL-DL-ConfigDedicated and TDD-UL-DL-ConfigCommon are both included in the RRC signaling, they are used for a user-level and a cell-level configuration, respectively. Therefore, both need to be included in different first RRC signaling and second RRC signaling, and sent to UE separately.

Furthermore, it should be noted that in the presence of a sixth parameter and/or a seventh parameter, the configuration of a slot by the eighth parameter complies with a rule specified by the sixth parameter and/or the seventh parameter.

The eighth parameter is to configure the SBFD symbol within the slot with the unit of slot.

In one example of the present disclosure, the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbol;
   and/or
the eighth parameter includes an eleventh parameter, which represents: configuring certain symbols specified in a DL slot and/or S slot in the TDD frame structure as first SBFD symbols;
   and/or
the eighth parameter includes a twelfth parameter, which represents: configuring certain symbols specified in a UL slot and/or S slot in the TDD frame structure as second SBFD symbol.

In one case, the eighth parameter can configure all symbols in certain slots of the TDD frame structure as SBFD symbols.

In one example of the present disclosure, the eighth parameter includes a ninth parameter, which represents: configuring all symbols in a specified DL slot and/or S slot in the TDD frame structure as first SBFD symbols.

For example, the ninth parameter can be referred to as allSbfd1 (all SBFD1).

In another example of the present disclosure, the eighth parameter includes a tenth parameter, which represents: configuring all UL symbols in a specified UL slot and/or S slot in the TDD frame structure as second SBFD symbols.

For example, the tenth parameter can be referred to as allSbfd2 (all SBFD2).

In another case, the eighth parameter can configure certain symbols in certain slots of the TDD frame structure as SBFD symbols.

In one example of the present disclosure, the eighth parameter includes an eleventh parameter, which represents: configuring specified certain symbols in a DL slot and/or S slot in the TDD frame structure as first SBFD symbols.

Wherein, the eleventh parameter can include: a position of a starting symbol in the DL slot and/or S slot among the specified certain symbols, a length of the specified certain symbols. The eleventh parameter is invalid for the configuration of symbols beyond the slot.

Specifically, the position of the starting symbol in the specified UL slot and/or S slot can be represented as startSymbolOfSbfd1, and the length of the specified certain symbols is nrofSbfdSymbols1. It indicates that starting from the startSymbolOfSbfd1^{th} symbol in this slot, the number nrofSbfdSymbols1 of consecutive symbols are configured as the SBFD symbols.

In addition, it should be noted that in the case where both the first SBFD symbol and the second SBFD symbol exist in a same slot, the part where the first SBFD symbol coincides with the second SBFD symbol in the same slot is configured according to the first SBFD symbol. That is to say, the coinciding part of the first SBFD symbol and the second SBFD symbol belongs to the first SBFD symbol.

Additionally, the eleventh parameter can also include: a position of a starting symbol in the UL slot and/or S slot among the specified certain symbols, a position of an ending symbol in the slot specified above.

In another example of the present disclosure, the eighth parameter includes the twelfth parameter, which represents: configuring specified certain symbols in the UL slots and/or S slots in the TDD frame structure as the second SBFD symbol.

Wherein, the twelfth parameter can include: a position of a starting symbol in the UL slot and/or S slot among the specified certain symbols, a length of the specified certain symbols. The twelfth parameter is invalid for the configuration of symbols beyond the slot.

Specifically, the position of the starting symbol in the specified UL slot and/or S slot can be represented as startSymbolOfSbfd2, and the length of the specified certain symbols is nrofSbfdSymbols2. It indicates that starting from the startSymbolOfSbfd2^{th} symbol in this slot, the number nrofSbfdSymbols2 of consecutive symbols are configured as the SBFD symbols.

Additionally, the twelfth parameter can also include: the position of the starting symbol in the UL slot and/or S slot among the specified certain symbols, the position of an ending symbol in the specified slot.

Refer to Figure 7, which is a schematic diagram of a fifth SBFD time domain resource provided by an example of the present disclosure.

Figure 7 contains slots 1 to 2, a total of 2 slots. Each slot contains symbols 0-13, a total of 14 symbols. Figure 6 shows a schematic diagram of the results of a user-level SBFD time domain resource configuration using the second RRC signaling. Wherein, slot 1 is a D slot, slot 2 is an S slot, and all symbols in the S slot are F symbols. For slot 1, allSbfd1 is configured and all symbols in slot 1 are configured as the SBFD time domain resource. The remaining parameters are not configured. In slot 2, startSymbolOfSbfd1 is configured as 1 and nrofSbfdSymbols1 is configured as 12, then the first 12 symbols in slot 2 are configured as the SBFD time domain resource.

As can be seen from the above, in the solution provided in the example of the present disclosure, the base station can further configure the SBFD symbol of the UE through the eighth parameter in TDD-UL-DL-ConfigDedicated included in the second RRC signaling, thus achieving dynamic configuration at the user level for specific UE and flexible configuration of SBFD time domain resources for UE.

In some scenarios, it is necessary to cancel the configuration of an SBFD time domain resource, which means restoring the configured SBFD time domain resource to the traditional slot in the TDD frame structure. In this case, the recovery process can be achieved through the following examples.

In one example of the present disclosure, the base station may also perform the following block C.

block C: sending a third RRC signaling to the UE.

Wherein, the third RRC signaling includes a thirteenth parameter. The thirteenth parameter is to control the UE to revert the configuration of a time domain resource to prior to receiving the second RRC signaling.

The thirteenth parameter can be referred to as revertToOriginal (revert to original). When the UE receives the third RRC signal containing the thirteenth parameter, the configuration of the SBFD time domain resource is reverted to prior to receiving the second RRC signal.

The thirteenth parameter can be included in TDD-UL-DL-ConfigDedicated. The thirteenth parameter can be included in the TDD-UL-DL-ConfigDedicated of the same RRC signaling as any one or more of the eighth to twelfth parameters. In this case, the second RRC signaling and the third RRC signaling are the same RRC signaling.

Alternatively, the thirteenth parameter can be included separately in the TDD-UL-DL-ConfigDedicated of an RRC signaling. In this case, the second RRC signaling and the third RRC signaling are not the same RRC signaling.

In one example of the present disclosure, the eighth parameter to thirteenth parameter can be configured in one structural parameter, the above structural parameters are named as TDD-UL-DL-SlotConfig-SBFD (Time Division Duplex - UpLink - DownLink - Slot Configuration-Sub-Band Full Duplex), and TDD-UL-DL-SlotConfig-SBFD is added to TDD-UL-DL-ConfigDedicated.

An example of TDD-UL-DL-ConfigDedicated is: 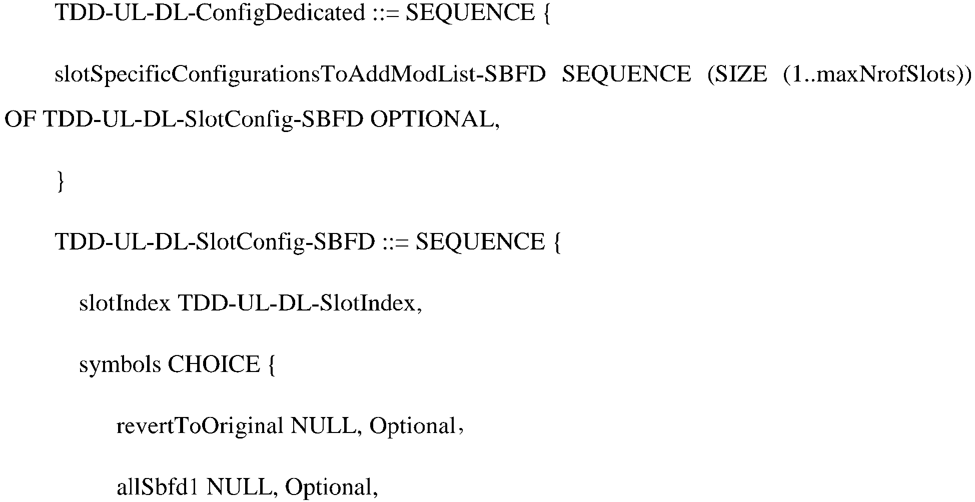 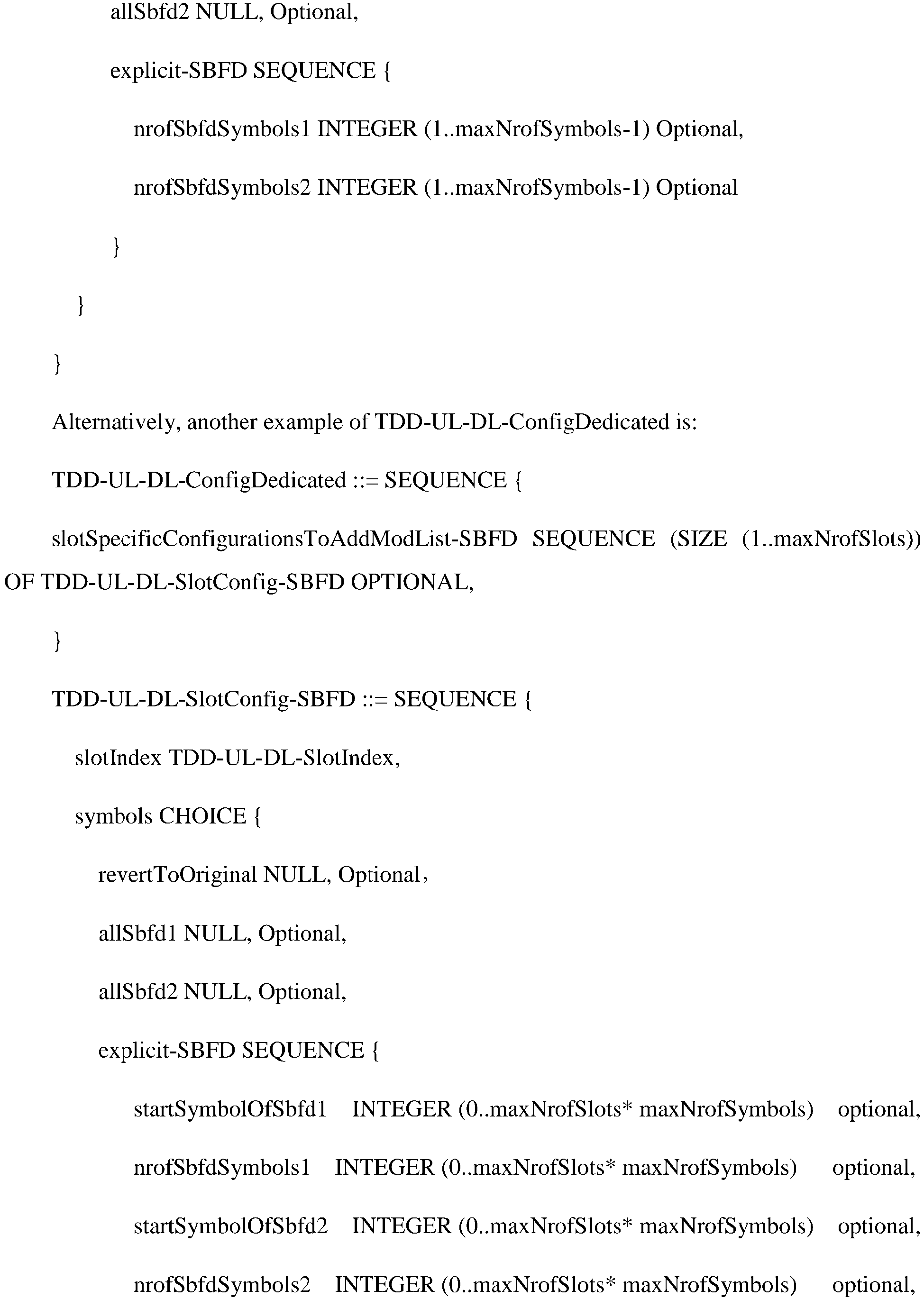 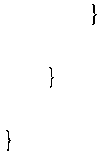 wherein, slotSpecificConfigurationsToAddModList-SBFD (SBFD specific configuration slot set) represents a set of slots to be configured with SBFD symbols.

In another example of the present disclosure, in order to achieve configuration recovery, the base station can also perform the following block D.

block D: sending a fourth RRC signaling to the UE.

Wherein, the fourth RRC signaling includes a fourteenth parameter, which is to control the UE to revert the configuration of a time domain resourcetime domain resource to prior to configuring an SBFD time domain resource.

The fourteenth parameter can be represented as slotSpecificConfigurationsToReleaseList (slot specific configuration release list), which releases a series of slots from the SBFD time domain resource and reverts them to the original state of the TDD frame structure.

The fourteenth parameter can be included in TDD-UL-DL-ConfigDedicated. The fourteenth parameter can be included in the TDD-UL-DL-ConfigDedicated of the same RRC signaling as any one or more of the eighth to twelfth parameters. In this case, the second RRC signaling and the fourth RRC signaling are the same RRC signaling.

Alternatively, the fourteenth parameter can be included separately in the TDD-UL-DL-ConfigDedicated of an RRC signaling. In this case, the second RRC signaling and the forth RRC signaling are not the same RRC signaling.

An example of TDD-UL-DL-ConfigDedicated is:
in TDD-UL-DL-ConfigDedicated:

```
     TDD-UL-DL-ConfigDedicated ::= SEQUENCE {
       slotSpecificConfigurationsToAddModList-SBFD SEQUENCE (SIZE (1..maxNrofSlots))
 OF TDD-UL-DL-SlotConfig-SBFD OPTIONAL,
       slotSpecificConfigurationsToReleaseList-SBFD SEQUENCE (SIZE (1..maxNrofSlots))
 OF TDD-UL-DL-SlotIndex OPTIONAL,
     }
```

In summary, the examples of the present disclosure explain in details how to configure an SBFD time domain resource through semi-static (cell level) or dynamic (user level) methods. Through the examples of the present disclosure, the SBFD time-frequency resource can be clearly and flexibly configured based on the current TDD technology, which integrates the configuration of the SBFD time-frequency resource with the current TDD frame structure, thus facilitating the practical implementation of SBFD technology.

Corresponding to the time domain resource configuration method applied to a base station, the present disclosure also provides a time domain resource configuration method applied to a UE.

An example of the present disclosure provides a time domain resource configuration method applied to a UE, as shown in Figure 8, which is a flowchart of another time domain resource configuration method provided in an example of the present disclosure. The above method includes blocks E to F as follows.
block E: receiving a first RRC signaling sent by a base station;
wherein a Time Division Duplex - UpLink - DownLink - Common Configuration TDD-UL-DL-ConfigCommon in the first RRC signaling includes a TDD frame structure pattern and an SBFD pattern, the TDD frame structure pattern is to configure a TDD frame structure, and the SBFD pattern is to configure an SBFD time domain resource and carries a first parameter and a second parameter, the first parameter representing a period of the SBFD time domain resource, and the second parameter a time-domain position of the SBFD time domain resource in the TDD frame structure or the TDD frame structure pattern;
block F: configuring the TDD frame structure and the SBFD time domain resource according to the TDD frame structure pattern, the SBFD pattern, the first parameter and the second parameter.

As can be seen from the above, in the solution provided by the example of the present disclosure, the base station sends a cell-level first RRC signaling to the UE, the first RRC signaling includes the first parameter and a second parameter of the SBFD. Since the first parameter can represent the period of the SBFD time domain resource, the second parameter can represent the time-domain position of the SBFD time domain resource in the TDD frame structure. After receiving the first RRC signaling, the UE can configure the SBFD time domain resource based on the first parameter and the second parameter, to achieve the SBFD communication between the base station and the UE.

In one example of the present disclosure, the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
   or
the TDD-UL-DL-ConfigCommon includes one SBFD pattern and two TDD frame structure patterns. The SBFD pattern corresponds to the two TDD frame structure patterns, and the SBFD pattern is to configure the SBFD time domain resource, and the period represented by the first parameter is a third integer multiple of a sum of periods configured in the two TDD frame structure patterns.

In one example of the present disclosure, the first parameter is in the form of: a value of the period or a specific value of a multiple between the period and a TDD frame structure period.

In one example of the present disclosure, the second parameter represents a time-domain position of one or two SBFD time domain resources in the TDD frame structure or the TDD frame structure pattern.

In one example of the present disclosure, the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource;

Alternatively, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern. In the case where one SBFD pattern corresponds to two TDD frame structure patterns, the fifth parameter represents a position of an ending symbol of the SBFD time domain resource in the TDD frame structure.

In one example of the present disclosure, the second parameter comprises a third parameter of one SBFD time domain resource;
or
the second parameter includes a third parameter of a first SBFD time domain resource and a second SBFD time domain resource, wherein the first SBFD time domain resource is located before the second SBFD time domain resource.

In one example of the present disclosure, the second parameter represents the time-domain positions of a first SBFD time domain resource and a second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that overlaps with a traditional UL symbol is invalid;
   and/or
In the case where the TDD-UL-DL-ConfigCommon includes a sixth parameter, the sixth parameter represents whether a first symbol in a first SBFD time domain resource that coincides with a traditional DL symbol or a traditional F symbol is invalid; in the case where a sixth parameter is not included in the TDD-UL-DL-ConfigCommon, a first symbol that coincides with a traditional DownLink DL symbol or a traditional flexible F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure.

In one example of the present disclosure, in the case where the sixth parameter takes the value of a first value, the first symbol that coincides with the traditional DL symbol is valid, and the first symbol that coincides with the traditional F symbol is invalid;
In the case where the sixth parameter takes the value of a second value, the first symbol that coincides with the traditional DL symbol is invalid, and the first symbol that coincides with the traditional F symbol is valid.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that overlaps with a traditional DL symbol is invalid;
and/or

In the case where the TDD-UL-DL-ConfigCommon includes a seventh parameter, the seventh parameter represents whether a second symbol in a second SBFD time domain resource that coincides with a traditional UL symbol or a traditional F symbol is invalid; in the case where a seventh parameter is not included in the TDD-UL-DL-ConfigCommon, a second symbol that coincides with a traditional UL symbol or a traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure.

In one example of the present disclosure, in the case where the seventh parameter takes the value of a third value, the second symbol that coincides with the traditional UL symbol is valid, and the second symbol that coincides with the traditional F symbol is invalid;
In the case where the seventh parameter takes the value of a fourth value, the second symbol that coincides with the traditional UL symbol is invalid, and the second symbol that coincides with the traditional F symbol is valid.

As can be seen from the above, the example of the present disclosure is configured with a conflict handling mechanism when there is an overlapping conflict between the SBFD time domain resource and the traditional slot in the TDD frame structure or the TDD frame structure pattern, and can further process the overlapping conflict by configuring the optional sixth parameter and/or the seventh parameter. For the two SBFD time domain resources configured with the second parameter, a diverse and different conflict handling mechanism is provided.

In one example of the present disclosure, if the TDD-UL-DL-ConfigCommon includes one SBFD pattern and two TDD frame structure patterns, the SBFD time domain resource represented by the second parameter is within the range of the TDD frame structure configured by the two TDD frame structure patterns;
If the SBFD pattern contained in the TDD-UL-DL-ConfigCommon corresponds one-to-one to the TDD frame structure pattern, the SBFD time domain resource represented by the second parameter is within the range of the TDD frame structure pattern.

In one example of the disclosure, the method further comprises:
receiving a second RRC signaling sent by the base station;
Wherein, a Time Division Duplex UpLink DownLink Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources;
according to the eighth parameter, configuring the SBFD symbols.

As can be seen from the above, in the solution provided in the example of the present disclosure, the base station can further configure the SBFD symbol of the UE through the eighth parameter in TDD-UL-DL-ConfigDedicated included in the second RRC signaling, thus achieving a user-level dynamic configuration for a specific UE and a flexible configuration of the SBFD time domain resource for the UE.

In one example of the present disclosure, the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
   and/or
the eighth parameter includes an eleventh parameter, which represents: configuring certain symbols specified in a DL slot and/or S slot in the TDD frame structure as first SBFD symbols;
   and/or
the eighth parameter includes a twelfth parameter, which represents: configuring certain symbols specified in a UL slot and/or S slot in the TDD frame structure as second SBFD symbols.

In one example of the present disclosure, in the presence of a sixth parameter and/or a seventh parameter, the configuration of a slot by the eighth parameter complies with a rule specified by the sixth parameter and/or the seventh parameter;
and/or

The part where the first SBFD symbol coincides with the second SBFD symbol in a same slot is configured according to the first SBFD symbol.

In one example of the present disclosure, the eleventh parameter includes: a position of a starting symbol in the DL slot and/or S slot among the specified certain symbols, a length of the specified certain symbols, the eleventh parameter is invalid for the configuration of symbols beyond the slot;
and/or
the twelfth parameter includes: a position of a starting symbol in the UL slot and/or S slot among the specified certain symbols, a length of the specified certain symbols, and the twelfth parameter is invalid for the configuration of symbols beyond the slot.

In one example of the present disclosure, the method further comprises:
receiving a third RRC signaling sent by the base station, which includes a thirteenth parameter; based on the thirteenth parameter, reverting the configuration of a time domain resource to prior to receiving the second RRC signaling;
   and/or
receiving a fourth RRC signaling sent by the base station, which includes a fourteenth parameter; based on the fourteenth parameter, reverting the configuration of a time domain resource to prior to configuring SBFD time domain resource;

In one example of the present disclosure, the UE ignores a configuration related to the SBFD in SFI (Slot Format Indication);
or

The UE configures an SBFD symbol according to SFI, and ignores an SBFD symbol configuration with respect to a UL symbol by SFI.

Corresponding to the time domain resource configuration method applied to a base station, an example of the present disclosure also provides a time domain resource configuration apparatus applied to a base station.

An example of the present disclosure provides a time domain resource configuration apparatus applied to a base station, the apparatus comprises:
a first signaling sending module, for sending a first radio resource control RRC signaling to a user equipment UE;
wherein a Time Division Duplex - UpLink - DownLink - Common Configuration TDD-UL-DL-ConfigCommon in the first RRC signaling includes a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter represents a period of the SBFD time domain resource, and the second parameter represents a time-domain position of the SBFD time domain resource in the TDD frame structure or the TDD frame structure pattern.

As can be seen from the above, in the solution provided by the example of the present disclosure, the base station sends the cell-level first RRC signaling to the UE. The first RRC signaling includes the first parameter and the second parameter of the SBFD. Since the first parameter can represent the period of the SBFD time domain resource, the second parameter can represent the time-domain position of the SBFD time domain resource in the TDD frame structure, after receiving the first RRC signaling, the UE can configure the SBFD time domain resource based on the first parameter and the second parameter, to achieve SBFD communication between the base station and the UE.

In one example of the present disclosure, the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
   or
the TDD-UL-DL-ConfigCommon includes one SBFD pattern and two TDD frame structure patterns. The SBFD pattern corresponds to the two TDD frame structure patterns, and the SBFD pattern is to configure the SBFD time domain resource and the period represented in the first parameter is a third integer multiple of a sum of periods configured in the two TDD frame structure patterns.

In one example of the present disclosure, the first parameter is in the form of: a value of the period or a specific value of a multiple between the period and a TDD frame structure period.

In one example of the present disclosure, the second parameter represents a time-domain position of one or two SBFD time domain resources in the TDD frame structure or the TDD frame structure pattern.

In one example of the present disclosure, the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource;
Alternatively, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern; in the case where one SBFD pattern corresponds to two TDD frame structure patterns, the fifth parameter represents a position of an ending symbol of the SBFD time domain resource in the TDD frame structure.

In one example of the present disclosure, the second parameter comprises a third parameter of one SBFD time domain resource;
or

The second parameter includes a third parameter of a first SBFD time domain resource and a second SBFD time domain resource, wherein the first SBFD time domain resource is located before the second SBFD time domain resource.

In one example of the present disclosure, the second parameter represents time-domain positions of a first SBFD time domain resource and a second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that overlaps with a traditional UpLink UL symbol is invalid;
and/or

In the case where the TDD-UL-DL-ConfigCommon includes a sixth parameter, the sixth parameter represents whether a first symbol in a first SBFD time domain resource that coincides with a traditional DownLink DL symbol or a traditional flexible F symbol is invalid; in the case where a sixth parameter is not included in the TDD-UL-DL-ConfigCommon, a first symbol that coincides with a traditional DL symbol or a traditional F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure.

In one example of the present disclosure, in the case where the sixth parameter takes the value of a first value, the first symbol that coincides with the traditional DL symbol is valid, and the first symbol that coincides with the traditional F symbol is invalid;
In the case where the sixth parameter takes the value of a second value, the first symbol that coincides with the traditional DL symbol is invalid, and the first symbol that coincides with the traditional F symbol is valid.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that overlaps with a traditional DL symbol is invalid;
and/or

In the case where the TDD-UL-DL-ConfigCommon includes a seventh parameter, the seventh parameter represents whether a second symbol in a second SBFD time domain resource that coincides with a traditional UL symbol or a traditional F symbol is invalid; in the case where a seventh parameter is not included in the TDD-UL-DL-ConfigCommon, a second symbol that coincides with a traditional UL symbol or a traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure.

In one example of the present disclosure, in the case where the seventh parameter takes the value of a third value, the second symbol that coincides with the traditional UL symbol is valid, and the second symbol that coincides with the traditional F symbol is invalid;
In the case where the seventh parameter takes the value of a fourth value, the second symbol that coincides with the traditional UL symbol is invalid, and the second symbol that coincides with the traditional F symbol is valid.

In one example of the present disclosure, if the TDD-UL-DL-ConfigCommon includes one SBFD pattern and two TDD frame structure patterns, the SBFD time domain resource represented by the second parameter is within the range of the TDD frame structure configured by the two TDD frame structure patterns;
If the SBFD pattern contained in the TDD-UL-DL-ConfigCommon corresponds one-to-one to the TDD frame structure pattern, the SBFD time domain resource represented by the second parameter is within the range of the TDD frame structure pattern.

As can be seen from the above, the example of the present disclosure is configured with a conflict handling mechanism when there is an overlapping conflict between the SBFD time domain resource and the traditional slot in the TDD frame structure or the TDD frame structure pattern, and can further process the overlapping conflict by configuring the optional sixth parameter and/or the seventh parameter. For the two SBFD time domain resources configured with the second parameter, a diverse and different conflict handling mechanism is provided.

In one example of the present disclosure, the apparatus further comprises:
a second signaling sending module for sending a second RRC signaling to the UE;
wherein, a Time Division Duplex - UpLink - DownLink - Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources.

As can be seen from the above, in the solution provided in the example of the present disclosure, the base station can further configure the SBFD symbol of the UE through the eighth parameter in TDD-UL-DL-ConfigDedicated included in the second RRC signaling, thus achieving a user-level dynamic configuration for a specific UE and a flexible configuration of SBFD time domain resource for the UE.

In one example of the present disclosure, the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
   and/or
the eighth parameter includes an eleventh parameter, which represents: configuring certain symbols specified in a DL slot and/or S slot in the TDD frame structure as first SBFD symbols;
   and/or
the eighth parameter includes a twelfth parameter, which represents: configuring certain symbols specified in a UL slot and/or S slot in the TDD frame structure as second SBFD symbols.

In one example of the present disclosure, in the presence of a sixth parameter and/or a seventh parameter, the configuration of a slot by the eighth parameter complies with a rule specified by the sixth parameter and/or the seventh parameter;
and/or
the part where the first SBFD symbol coincides with the second SBFD symbol in a same slot is configured according to the first SBFD symbol.

In one example of the present disclosure, the eleventh parameter includes: a position of a starting symbol in the DL slot and/or S slot among the specified certain symbols, a length of the specified certain symbols, the eleventh parameter is invalid for the configuration of symbols beyond the slots;
the twelfth parameter includes: a position of a starting symbol in the UL slot and/or S slot among the specified certain symbols, a length of the specified certain symbols. The twelfth parameter is invalid for the configuration of symbols beyond the slot.

In one example of the disclosure, the apparatus further comprises:
a third signaling sending module, for sending a third RRC signaling to the UE, the third signaling includes a thirteenth parameter; the thirteenth parameter is to control the UE to revert the configuration of a time domain resource to prior to receiving the second RRC signaling;
   and/or
a fourth signaling sending module, for sending a fourth RRC signaling to the UE, the fourth signaling includes a fourteenth parameter; the fourteenth parameter is to control the UE to revert the configuration of a time domain resource to prior to configuring an SBFD time domain resource.

Corresponding to the time domain resource configuration method applied to a UE, an example of the present disclosure also provides a time domain resource configuration apparatus applied to a UE.

An example of the present disclosure provides a time domain resource configuration apparatus applied to a UE, as shown in Figure 9, which is a structure diagram of one time domain resource configuration apparatus provided in an example of the present disclosure, the apparatus comprises:
a first signaling receiving module 901, for receiving a first RRC signaling sent by a base station;
wherein a Time Division Duplex - UpLink - DownLink - Common Configuration TDD-UL-DL-ConfigCommon in the first RRC signaling includes a TDD frame structure pattern and an SBFD pattern, the TDD frame structure pattern is to configure a TDD frame structure, and the SBFD pattern is to configure an SBFD time domain resource and carries a first parameter and a second parameter, the first parameter represents a period of the SBFD time domain resources, and the second parameter represents a time-domain position of the SBFD time domain resources in the TDD frame structure or the TDD frame structure pattern;
a first resource configuration module 902, for configuring the TDD frame structure and the SBFD time domain resource according to the TDD frame structure pattern, the first parameter and the second parameter.

As can be seen from the above, in the solution provided by the example of the present disclosure, the base station sends the cell-level first RRC signaling at the cell level to the UE. The first RRC signaling includes the parameter and the second parameter of the SBFD. Since the first parameter can represent the period of the SBFD time domain resource, the second parameter can represent the time-domain position of the SBFD time domain resource in the TDD frame structure, after receiving the first RRC signaling, the UE can configure the SBFD time domain resource based on the first parameter and the second parameter, to achieve SBFD communication between the base station and the UE.

In one example of the present disclosure, the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
the TDD-UL-DL-ConfigCommon includes one SBFD pattern and two TDD frame structure patterns. The SBFD pattern corresponds to the two TDD frame structure patterns, and the SBFD pattern is to configure the SBFD time domain resource and the period represented by the first parameter is a third integer multiple of a sum of periods configured in the two TDD frame structure patterns.

In one example of the present disclosure, the first parameter is in the form of : a value of the period or a specific value of a multiple between the period and a TDD frame structure period.

In one example of the present disclosure, the second parameter above represents a time-domain position of one or two SBFD time domain resources in the TDD frame structure or the TDD frame structure pattern.

In one example of the present disclosure, the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource;

Alternatively, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern; in the case where one SBFD pattern corresponds to two TDD frame structure patterns, the fifth parameter represents a position of an ending symbol of the SBFD time domain resource in the TDD frame structure.

In one example of the present disclosure, the second parameter comprises a third parameter of one SBFD time domain resource;
or

The second parameter includes a third parameter of a first SBFD time domain resource and a second SBFD time domain resource, wherein the first SBFD time domain resource is located before the second SBFD time domain resource.

In one example of the present disclosure, the second parameter represents time-domain positions of a first SBFD time domain resource and a second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that overlaps with a traditional UpLink UL symbol is invalid;
and/or

In the case where the TDD-UL-DL-ConfigCommon includes a sixth parameter, the sixth parameter represents whether a first symbol in a first SBFD time domain resource that coincides with a traditional DL symbol or a traditional F symbol is invalid; in the case where a sixth parameter is not included in the TDD-UL-DL-ConfigCommon, a first symbol that coincides with a traditional DownLink DL symbol or a traditional flexible F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure.

In one example of the present disclosure, in the case where the sixth parameter takes the value of a first value, the first symbol that coincides with the traditional DL symbol is valid, and the first symbol that coincides with the traditional F symbol is invalid;
In the case where the sixth parameter takes the value of a second value, the first symbol that coincides with the traditional DL symbol is invalid, and the first symbol that coincides with the traditional F symbol is valid.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that overlaps with a traditional DL symbol is invalid;
and/or

In the case where the TDD-UL-DL-ConfigCommon includes a seventh parameter, the seventh parameter represents whether a second symbol in a second SBFD time domain resource that coincides with a traditional UL symbol or a traditional F symbol is invalid; in the case where a seventh parameter is not included in the TDD-UL-DL-ConfigCommon, a second symbol that coincides with a traditional UL symbol or a traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure.

In one example of the present disclosure, in the case where the seventh parameter takes the value of a third value, the second symbol that coincides with the traditional UL symbol is valid, and the second symbol that coincides with the traditional F symbol is invalid;
In the case where the seventh parameter takes the value of a fourth value, the second symbol that coincides with the traditional UL symbol is invalid, and the second symbol that coincides with the traditional F symbol is valid.

As can be seen from the above, the example of the present disclosure is configured with a conflict handling mechanism when there is an overlapping conflict between an SBFD time domain resource and a traditional slot in TDD frame structures or the TDD frame structure patterns, and can further process the overlapping conflict by configuring the optional sixth parameter and/or the seventh parameter. For the two SBFD time domain resources configured with the second parameter, a diverse and different conflict handling mechanism is provided.

In one example of the present disclosure, if the TDD-UL-DL-ConfigCommon includes one SBFD pattern and two TDD frame structure patterns, the SBFD time domain resource represented by the second parameter is within the range of the TDD frame structure configured by the two TDD frame structure patterns;
If the SBFD pattern contained in the TDD-UL-DL-ConfigCommon corresponds one-to-one to the TDD frame structure pattern, the SBFD time domain resource represented by the second parameter is within the range of the TDD frame structure pattern.

In one example of the disclosure, the apparatus further comprises:
a second signaling receiving module, for receiving a second RRC signaling sent by the base station;
Wherein, a Time Division Duplex - UpLink - DownLink - Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources;
the second resource configuration module, for configuring the SBFD symbols according to the eighth parameter.

As can be seen from the above, in the solution provided in the example of the present application, the base station can further configure the SBFD symbols of the UE through the eighth parameter in TDD-UL-DL-ConfigDedicated included in the second RRC signaling, thus achieving a user-level dynamic configuration for a specific UE and a flexible configuration of an SBFD time domain resource for the UE.

In one example of the present disclosure, the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
   and/or
the eighth parameter includes an eleventh parameter, which represents: configuring certain symbols specified in a DL slot and/or S slot in the TDD frame structure as first SBFD symbols;
   and/or
the eighth parameter includes a twelfth parameter, which represents: configuring certain symbols specified in a UL slot and/or S slot in the TDD frame structure as second SBFD symbols.

In one example of the present disclosure, in the presence of a sixth parameter and/or a seventh parameter, the configuration of a slot by the eighth parameter complies with a rule specified by the sixth parameter and/or the seventh parameter;
and/or
the part where the first SBFD symbol coincides with the second SBFD symbol in a same slot is configured according to the first SBFD symbol.

In one example of the present disclosure, the eleventh parameter includes: a position of a starting symbol in the DL slot and/or S slot among the specified certain symbols, a length of the specified certain symbols, the eleventh parameter is invalid for the configuration of symbols beyond the slot;
and/or
the twelfth parameter includes: a position of a starting symbol in the UL slot and/or S slot among the specified certain symbols, a length of the specified certain symbols, the twelfth parameter is invalid for the configuration of symbols beyond the slot.

In one example of the disclosure, the apparatus further comprises:
a third signaling receiving module, for receiving a third RRC signaling sent by the base station, which includes a thirteenth parameter; a first resource reverting module, for, based on the thirteenth parameter, reverting the configuration of a time domain resource to prior to receiving the second RRC signaling;
   and/or
a fourth signaling receiving module, for receiving a fourth RRC signaling sent by the base station, which includes a fourteenth parameter; a second resource reverting module, for, based on the fourteenth parameter, reverting the configuration of a time domain resource to prior to configuring the SBFD time domain resource.

In one example of the present disclosure, the UE ignores a configuration related to SBFD in SFI;
or

The UE configures an SBFD symbol according to SFI, and ignores an SBFD symbol configuration with respect to the UL symbol by SFI.

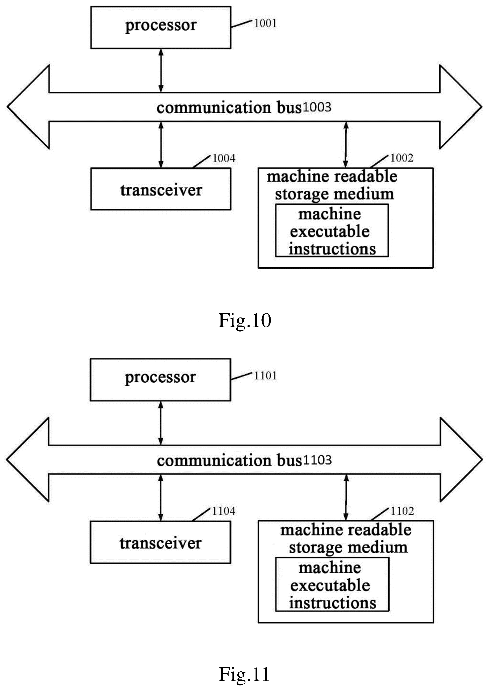

Corresponding to the time domain resource configuration method applied to a base station, an example of the present disclosure also provides a base station, as shown in Figure 10, comprising:
a processor 1001;
a transceiver 1004;
a machine readable storage medium 1002, which stores machine executable instructions that can be executed by the processor 1001; the machine executable instructions cause the processor 1001 to perform the following blocks:
   sending a first radio resource control RRC signaling to a user equipment UE;
   wherein a Time Division Duplex - UpLink - DownLink - Common Configuration TDD-UL-DL-ConfigCommon in the first RRC signaling includes a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter represents a period of the SBFD time domain resource, and the second parameter represents a time-domain position of the SBFD time domain resource in the TDD frame structure or the TDD frame structure pattern.

As can be seen from the above, in the solution provided by the example of the present disclosure, the base station sends the cell-level first RRC signaling to the UE. The first RRC signaling includes the first parameter and the second parameter of the SBFD. Since the first parameter can represent the period of the SBFD time domain resource, the second parameter can represent the time-domain position of the SBFD time domain resource in the TDD frame structure, after receiving the first RRC signaling, the UE can configure the SBFD time domain resource based on the first parameter and the second parameter, to achieve SBFD communication between the base station and the UE.

In one example of the present disclosure, the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
   or
the TDD-UL-DL-ConfigCommon includes one SBFD pattern and two TDD frame structure patterns, the SBFD pattern corresponding to the two TDD frame structure patterns, and the SBFD pattern is to configure the SBFD time domain resource, the period represented by the first parameter is a third integer multiple of a sum of periods configured in the two TDD frame structure patterns.

In one example of the present disclosure, the first parameter is in the form of: a value of the period or a specific value of a multiple between the period and a TDD frame structure period.

In one example of the present disclosure, the second parameter represents a time-domain position of one or two SBFD time domain resources in the TDD frame structure or the TDD frame structure pattern.

In one example of the present disclosure, the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource;

Alternatively, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern; in the case where one SBFD pattern corresponds to two TDD frame structure patterns, the fifth parameter represents a position of an ending symbol of the SBFD time domain resource in the TDD frame structure.

In one example of the present disclosure, the second parameter comprises a third parameter of one SBFD time domain resource;
or
the second parameter includes a third parameter of a first SBFD time domain resource and a second SBFD time domain resource, wherein the first SBFD time domain resource is located before the second SBFD time domain resource.

In one example of the present disclosure, the second parameter represents time-domain positions of a first SBFD time domain resource and a second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that coincides with a traditional UL symbol is invalid;
and/or

In the case where the TDD-UL-DL-ConfigCommon includes a sixth parameter, the sixth parameter represents whether a first symbol in a first SBFD time domain resource that coincides with a traditional DownLink DL symbol or a traditional flexible F symbol is invalid; in the case where a sixth parameter is not included in the TDD-UL-DL-ConfigCommon, a first symbol that coincides with a traditional DL symbol or a traditional F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure;
In one example of the present disclosure, in the case where the sixth parameter takes the value of a first value, the first symbol that coincides with the traditional DL symbol is valid, and the first symbol that coincides with the traditional F symbol is invalid;
In the case where the sixth parameter takes the value of a second value, the first symbol that coincides with the traditional DL symbol is invalid, and the first symbol that coincides with the traditional F symbol is valid.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that overlaps with a traditional DL symbol is invalid;
and/or

In the case where the TDD-UL-DL-ConfigCommon includes a seventh parameter, the seventh parameter represents whether a second symbol in a second SBFD time domain resource that coincides with a traditional UL symbol or a traditional F symbol is invalid; in the case where a seventh parameter is not included in the TDD-UL-DL-ConfigCommon, a second symbol that coincides with a traditional UL symbol or a traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure;
In one example of the present disclosure, in the case where the seventh parameter takes the value of a third value, the second symbol that coincides with the traditional UL symbol is valid, and the second symbol that coincides with the traditional F symbol is invalid;
In the case where the seventh parameter takes the value of a fourth value, the second symbol that coincides with the traditional UL symbol is invalid, and the second symbol that coincides with the traditional F symbol is valid.

As can be seen from the above, in the solution provided by the example of the present disclosure, the base station sends the cell-level first RRC signaling to the UE. The first RRC signaling includes the first parameter and the second parameter of the SBFD. Since the first parameter can represent the period of the SBFD time domain resource, the second parameter can represent the time-domain position of the SBFD time domain resource in the TDD frame structure, after receiving the first RRC signaling, the UE can configure the SBFD time domain resource based on the first parameter and the second parameter, to achieve SBFD communication between the base station and the UE.

In one example of the present disclosure, if the TDD-UL-DL-ConfigCommon includes one SBFD pattern and two TDD frame structure patterns, the SBFD time domain resource represented by the second parameter is within the range of the TDD frame structure configured by the two TDD frame structure patterns;
if the SBFD pattern contained in the TDD-UL-DL-ConfigCommon corresponds one-to-one to the TDD frame structure pattern, the SBFD time domain resource represented by the second parameter is within the range of the TDD frame structure pattern.

In one example of the disclosure, the machine executable instructions also cause the processor to perform the following blocks:
sending a second RRC signaling to the UE;
wherein, a Time Division Duplex - UpLink - DownLink - Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources.

As can be seen from the above, in the solution provided in the example of the present disclosure, the base station can further configure the SBFD symbol of the UE through the eighth parameter in TDD-UL-DL-ConfigDedicated included in the second RRC signaling, thus achieving a user-level dynamic configuration for a specific UE and a flexible configuration of the SBFD time domain resource for the UE.

In one example of the present disclosure, the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
   and/or
the eighth parameter includes an eleventh parameter, which represents: configuring certain symbols specified in a DL slot and/or S slot in the TDD frame structure as first SBFD symbols;
   and/or
the eighth parameter includes a twelfth parameter, which represents: configuring certain symbols specified in a UL slot and/or S slot in the TDD frame structure as second SBFD symbols.

In one example of the present disclosure, in the presence of a sixth parameter and/or a seventh parameter, the configuration of a slot by the eighth parameter complies with a rule specified by the sixth parameter and/or the seventh parameter;
and/or

The part where the first SBFD symbol coincides with the second SBFD symbol in a same slot is configured according to the first SBFD symbol.

In one example of the present disclosure, the eleventh parameter includes: a position of a starting symbol in the DL and/or S slot among the specified certain symbols, a length of the specified certain symbols, the eleventh parameter is invalid for the configuration of symbols beyond the slot;
and/or
the twelfth parameter includes: a position of a starting symbol in the UL slot and/or S slot among the specified certain symbols, the length of the specified certain symbols. The twelfth parameter is invalid for the configuration of symbols beyond the slot.

In one example of the disclosure, the machine executable instructions also cause the processor to perform the following blocks:
sending a third RRC signaling to the UE, the third signaling includes a thirteenth parameter; the thirteenth parameter is to control the UE to revert the configuration of a time domain resource to prior to receiving the second RRC signaling;
   and/or
sending a fourth RRC signaling to the UE, the fourth signaling includes a fourteenth parameter; the fourteenth parameter is to control the UE to revert the configuration of a time domain resource to prior to configuring the SBFD time domain resource.

As shown in Figure 10, the network device may also include a communication bus 1003. The processor 1001, the machine readable storage medium 1002, and the transceiver 1004 communicate with each other through the communication bus 1003, which can be a Peripheral Component Interconnect (PCI) bus or an Extended Industry Standard Architecture (EISA) bus. The communication bus 1003 can be divided into an address bus, data bus, control bus, etc.

The transceiver 1004 can be a wireless communication module, and the transceiver 1004 performs data exchange with other devices under the control of the processor 1001.

The machine readable storage medium 1002 may include Random Access Memory (RAM) or Non Volatile Memory (NVM), such as at least one disk storage. In addition, the machine readable storage medium 1002 can also be at least one storage device located far from the aforementioned processor.

The processor 1001 can be a general-purpose processor, including a Central Processing Unit (CPU), a Network Processor (NP), or the like; it can also be a Digital Signal Processor (DSP), an Application Specific Integrated Circuit (ASIC), a Field-Programmable Gate Array (FPGA) or other programmable logic devices, discrete gates or transistor logic devices, or discrete hardware components.

Corresponding to the time domain resource configuration method applied to a UE, an example of the present disclosure also provides a UE.

An example of the present disclosure provides a UE, as shown in Figure 11, the UE comprises:
a processor 1101;
a transceiver 1104;
a machine readable storage medium 1102, which stores machine executable instructions that can be executed by the processor 1101; the machine executable instructions cause the processor 1101 to perform the following blocks:
   receiving a first RRC signaling sent by a base station;
   wherein a Time Division Duplex - UpLink - DownLink - Common Configuration TDD-UL-DL-ConfigCommon in the first RRC signaling includes a TDD frame structure pattern and an SBFD pattern, the TDD frame structure pattern is to configure a TDD frame structure, and the SBFD pattern is to configure an SBFD time domain resource and carries a first parameter and a second parameter, the first parameter represents a period of the SBFD time domain resource, and the second parameter represents a time-domain position of the SBFD time domain resource in the TDD frame structure or the TDD frame structure pattern;
   configuring the TDD frame structure and the SBFD time domain resource according to the TDD frame structure pattern, the SBFD pattern, the first parameter and the second parameter.

As can be seen from the above, in the solution provided by the example of the present disclosure, the base station sends the cell-level first RRC signaling to the UE. The first RRC signaling includes the first parameter and the second parameter of the SBFD. Since the first parameter can represent the period of the SBFD time domain resource, the second parameter can represent the time-domain position of the SBFD time domain resource in the TDD frame structure, after receiving the first RRC signaling, the UE can configure the SBFD time domain resource based on the first parameter and the second parameter, to achieve SBFD communication between the base station and the UE.

In one example of the present disclosure, the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
   or
the TDD-UL-DL-ConfigCommon includes one SBFD pattern and two TDD frame structure patterns, The SBFD pattern corresponding to the two TDD frame structure patterns, and the SBFD pattern is to configure the SBFD time domain resource, and the period represented by the first parameter is a third integer multiple of a sum of periods configured in the two TDD frame structure patterns.

In one example of the present disclosure, the first parameter is in the form of: a value of the period or a specific value of a multiple between the period and a TDD frame structure period.

In one example of the present disclosure, the second parameter represents a time-domain position of one or two SBFD time domain resources in the TDD frame structure or the TDD frame structure pattern.

In one example of the present disclosure, the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource;
Alternatively, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern; in the case where one SBFD pattern corresponds to two TDD frame structure patterns, the fifth parameter represents a position of an ending symbol of the SBFD time domain resource in the TDD frame structure.

In one example of the present disclosure, the second parameter comprises a third parameter of one SBFD time domain resource;
or
the second parameter includes a third parameter of a first SBFD time domain resource and a second SBFD time domain resource, wherein the first SBFD time domain resource is located before the second SBFD time domain resource.

In one example of the present disclosure, the second parameter represents time-domain positions of a first SBFD time domain resource and a second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that overlaps with a traditional UL symbol is invalid;
and/or

In the case where the TDD-UL-DL-ConfigCommon includes a sixth parameter, the sixth parameter represents whether a first symbol in a first SBFD time domain resource that coincides with a traditional DL symbol or a traditional F symbol is invalid; in the case where a sixth parameter is not included in the TDD-UL-DL-ConfigCommon, a first symbol that coincides with a traditional DownLink DL symbol or a traditional flexible F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure;
In one example of the present disclosure, in the case where the sixth parameter takes the value of a first value, the first symbol that coincides with the traditional DL symbol is valid, and the first symbol that coincides with the traditional F symbol is invalid;
In the case where the sixth parameter takes the value of a second value, the first symbol that coincides with the traditional DL symbol is invalid, and the first symbol that coincides with the traditional F symbol is valid.

In one example of the present disclosure, the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that overlaps with a traditional DL symbol is invalid;
and/or

In the case where the TDD-UL-DL-ConfigCommon includes a seventh parameter, the seventh parameter represents whether a second symbol in a second SBFD time domain resource that coincides with a traditional UL symbol or a traditional F symbol is invalid; in the case where a seventh parameter is not included in the TDD-UL-DL-ConfigCommon, a second symbol that coincides with a traditional UL symbol or a traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure.

In one example of the present disclosure, in the case where the seventh parameter takes the value of a third value, the second symbol that coincides with the traditional UL symbol is valid, and the second symbol that coincides with the traditional F symbol is invalid;
in the case where the seventh parameter takes the value of a fourth value, the second symbol that coincides with the traditional UL symbol is invalid, and the second symbol that coincides with the traditional F symbol is valid.

As can be seen from the above, in the solution provided by the example of the present disclosure, the base station sends the cell-level first RRC signaling to the UE. The first RRC signaling includes the first parameter and the second parameter of the SBFD. Since the first parameter can represent the period of the SBFD time domain resource, the second parameter can represent the time-domain position of the SBFD time domain resource in the TDD frame structure, after receiving the first RRC signaling, the UE can configure the SBFD time domain resource based on the first parameter and the second parameter, to achieve SBFD communication between the base station and the UE.

In one example of the present disclosure, if the TDD-UL-DL-ConfigCommon includes one SBFD pattern and two TDD frame structure patterns, the SBFD time domain resource represented by the second parameter is within the range of the TDD frame structure configured by the TDD frame structure patterns;

If the SBFD pattern contained in the TDD-UL-DL-ConfigCommon corresponds one-to-one to the TDD frame structure pattern, the SBFD time domain resource represented by the second parameter is within the range of the TDD frame structure pattern.

In one example of the disclosure, the machine executable instructions also cause the processor to perform:
receiving a second RRC signaling sent by the base station;
Wherein, a Time Division Duplex - Uplink - Downlink - Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources;
According to the eighth parameter, configuring the SBFD symbols.

As can be seen from the above, in the solution provided in the example of the present disclosure, the base station can further configure the SBFD symbols of the UE through the eighth parameter in TDD-UL-DL-ConfigDedicated included in the second RRC signaling, thus achieving a user-level dynamic configuration for a specific UE and a flexible configuration of the SBFD time domain resource for the UE.

In one example of the present disclosure, the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
   and/or
the eighth parameter includes an eleventh parameter, which represents: configuring certain symbols specified in a DL slot and/or S slot in the TDD frame structure as first SBFD symbols;
   and/or
the eighth parameter includes a twelfth parameter, which represents: configuring certain symbols specified in a UL slot and/or S slot in the TDD frame structure as second SBFD symbols.

In one example of the present disclosure, in the presence of a sixth parameter and/or a seventh parameter, the configuration of a slot by the eighth parameter complies with a rule specified by the sixth parameter and/or the seventh parameter;
and/or

The part where the first SBFD symbol coincides with the second SBFD symbol in a same slot is configured according to the first SBFD symbol.

In one example of the present disclosure, the eleventh parameter includes: a position of a starting symbol in the DL slot and/or S slot among the specified certain symbols, a length of the specified certain symbols, the eleventh parameter is invalid for the configuration of symbols beyond the slot;
and/or
the twelfth parameter includes: a position of a starting symbol in the UL slot and/or S slot among the specified certain symbols, a length of the specified certain symbols, the twelfth parameter is invalid for the configuration of symbols beyond the slot.

In one example of the disclosure, the machine executable instructions also cause the processor to perform the following blocks:
receiving a third RRC signaling sent by the base station, which includes a thirteenth parameter; based on the thirteenth parameter, reverting the configuration of a time domain resource to prior to receiving the second RRC signaling;
   and/or
receiving a fourth RRC signaling sent by the base station, which includes a fourteenth parameter; based on the fourteenth parameter, reverting the configuration of a time domain resource to prior to configuring SBFD time domain resource.

In one example of the present disclosure, the UE ignores a configuration related to SBFD in SFI;
or

The UE configures an SBFD symbol according to SFI, and ignores an SBFD symbol configuration with respect to a UL symbol by SFI.

As shown in Figure 11, the network device may also include a communication bus 1103. The processor 1101, the machine readable storage medium 1102, and the transceiver 1104 communicate with each other through the communication bus 1103, which can be a Peripheral Component Interconnect (PCI) bus or an Extended Industry Standard Architecture (EISA) bus. The communication bus 1103 can be divided into an address bus, data bus, control bus, or the like.

The transceiver 1104 can be a wireless communication module, and performs data exchange with other devices under the control of the processor 1101.

The machine readable storage medium 1102 may include Random Access Memory (RAM) or Non Volatile Memory (NVM), such as at least one disk storage. In addition, the machine readable storage medium 1102 can also be at least one storage device located far from the aforementioned processor.

The processor 1101 can be a general-purpose processor, including a Central Processing Unit (CPU), a Network Processor (NP), or the like; It can also be a Digital Signal Processor (DSP), Application Specific Integrated Circuit (ASIC), Field-Programmable Gate Array (FPGA) or other programmable logic devices, discrete gates or transistor logic devices, or discrete hardware components.

Based on the same disclosure concept, according to the time domain resource configuration method provided by an example of the present disclosure, a machine readable storage medium stores machine executable instructions that, when called and executed by a processor, cause the processor to implement any block of the time domain resource configuration method applied to a base station or a UE.

In another example provided in the present disclosure, a computer program product containing instructions is also provided, which, when running on a computer, causes the computer to execute any block of the time domain resource configuration method applied to a base station or a UE in the above examples.

In the above examples, it can be realized in whole or in part by software, hardware, firm ware or any combination thereof. When implemented by software, it can be realized in the form of computer program products in whole or in part. The computer program product comprises one or more computer instructions. When the computer program instruction is loaded and executed on a computer, the flow or function described in the examples of the present disclosure is generated in whole or in part. The computer can be a general purpose computer, a special purpose computer, a computer network, or other programmable devices. The computer instruction can be stored in a computer-readable storage medium, or transferred from one computer-readable storage medium to another computer-readable storage medium. For example, the computer instruction can be transferred from a website, a computer, a server or a data center to another website site, computer, server or data center through wired (such as coaxial cable, optical fiber, digital subscriber line (DSL)) or wireless (such as infrared, wireless, microwave, or the like.) The computer-readable storage medium can be any available medium that can be accessed by a computer or a server, a data center integrated with one or more available media. The available media can be magnetic media (for example, floppy disk, hard disk, magnetic tape), optical media (for example, DVD), or semiconductor media (for example, solid state disk (SSD)).

It should be noted that the relational terms herein such as "first" and "second" are only to distinguish one entity or operation from another entity or operation, and do not necessarily require or imply any actual relationship or order between these entities or operations. Moreover, the terms "comprise", "contain", or any other variation thereof are intended to encompass non-exclusive inclusion, such that a process, method, item, or device that comprises a series of elements does not only comprises those elements, but also other elements that are not explicitly listed, or also comprise elements inherent in such a process, method, item, or device. Without further limitations, the elements limited by the statement "comprising one..." do not exclude the existence of other identical elements in the process, method, item, or device that comprises the elements.

Each example of the present disclosure is described in a relevant manner, and the same and similar parts of each example can be referred to each other, and each example highlights the differences from other example. In particular, for the examples of apparatuses, base stations, UEs, computer readable storage media and computer program products, and storage media, since they are basically similar to the examples of methods, the description is relatively simple. Reference can be made to the part of description of the examples of methods for details.

The above are only preferred examples of the present disclosure and are not intended to limit the protection scope of the present disclosure. Any modification, equivalent replacement, improvement, or the like made within the spirit and principles of this disclosure shall be included in the protection scope of the present disclosure.

## Claims

1. A time domain resource configuration method, wherein it is applied to a base station, and the method comprises:
sending a first radio resource control RRC signaling to a user equipment UE;
wherein a Time Division Duplex - UpLink - DownLink - Common Configuration TDD-UL-DL-ConfigCommon in the first RRC signaling includes a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter representing a period of the SBFD time domain resource, the second parameter representing a time-domain position of the SBFD time domain resource in the TDD frame structure or the TDD frame structure pattern.

2. The method according to claim 1, wherein the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
or
the TDD-UL-DL-ConfigCommon includes one SBFD pattern and two TDD frame structure patterns, the SBFD pattern corresponding to the two TDD frame structure patterns, the SBFD pattern being to configure the SBFD time domain resource, and the period represented by the first parameter is: a third integer multiple of a sum of periods configured in the two TDD frame structure patterns.

3. The method according to claim 1, wherein the first parameter is in the form of: a value of the period or a specific value of a multiple between the period and a TDD frame structure period.

4. The method according to claim 1, wherein the second parameter represents a time-domain position of one or two SBFD time domain resources in the TDD frame structure or the TDD frame structure pattern.

5. The method according to claim 4, wherein the second parameter includes: a third parameter and a fourth parameter; in the case where the TDD frame structure pattern corresponds one-to-one to the SBFD pattern, the third parameter represents: a position of a starting symbol of the SBFD time domain resource in the TDD frame structure pattern; in the case where one SBFD pattern corresponds to two TDD frame structure patterns, the third parameter represents: a position of a starting symbol of the SBFD time domain resource in the TDD frame structure; the fourth parameter is a symbol length of the SBFD time domain resource;
or, the second parameter includes: a third parameter and a fifth parameter; in the case where the TDD frame structure pattern corresponds one-to-one to the SBFD pattern, the fifth parameter represents: a position of an ending symbol of the SBFD time domain resource in the TDD frame structure pattern; in the case where one SBFD pattern corresponds to two TDD frame structure patterns, the fifth parameter represents: a position of an ending symbol of the SBFD time domain resource in the TDD frame structure.

6. The method according to claim 5, wherein the second parameter comprises a third parameter of one SBFD time domain resource;
or
the second parameter includes a third parameter of a first SBFD time domain resource and a second SBFD time domain resource, wherein the first SBFD time domain resource is located before the second SBFD time domain resource.

7. The method according to claim 4, wherein the second parameter represents time-domain positions of a first SBFD time domain resource and a second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

8. The method according to claim 4, wherein the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that coincides with a traditional UpLink UL symbol is invalid;
and/or
in the case where the TDD-UL-DL-ConfigCommon includes a sixth parameter, the sixth parameter represents: whether a first symbol in a first SBFD time domain resource that coincides with a traditional DownLink DL symbol or traditional Flexible F symbol is invalid; in the case where a sixth parameter is not included in the TDD-UL-DL-ConfigCommon, a first symbol that coincides with either a traditional DL symbol or a traditional F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure.

9. The method according to claim 8, wherein in the case where the sixth parameter takes the value of a first value, the first symbol that coincides with the traditional DL symbol is valid, and the first symbol that coincides with the traditional F symbol is invalid;
in the case where the sixth parameter takes the value of a second value, a first symbol that coincides with the traditional DL symbol is invalid, and a first symbol that coincides with the traditional F symbol is valid.

10. The method according to claim 4, wherein the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that coincides with a traditional DL symbol is invalid;
and/or
in the case where the TDD-UL-DL-ConfigCommon includes a seventh parameter, the seventh parameter represents: whether a second symbol in a second SBFD time domain resource that coincides with a traditional UL symbol or a traditional F symbol is invalid; in the case where a seventh parameter is not included in the TDD-UL-DL-ConfigCommon, a second symbol that coincides with either a traditional UL symbol or a traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure.

11. The method according to claim 10, wherein in the case where the seventh parameter takes the value of a third value, the second symbol that coincides with the traditional UL symbol is valid, and the second symbol that coincides with the traditional F symbol is invalid;
in the case where the seventh parameter takes the value of a fourth value, the second symbol that coincides with the traditional UL symbol is invalid, and the second symbol that coincides with the traditional F symbol is valid.

12. The method according to claim 1, wherein if the TDD-UL-DL-ConfigCommon includes one SBFD pattern and two TDD frame structure patterns, the SBFD time domain resource represented by the second parameter is within the range of the TDD frame structure configured by the two TDD frame structure patterns;
if the SBFD pattern contained in the TDD-UL-DL-ConfigCommon corresponds one-to-one to the TDD frame structure pattern, the SBFD time domain resource represented by the second parameter is within the range of the TDD frame structure pattern.

13. The method according to any one of claims 1-12, wherein the method further comprises:
sending a second RRC signaling to the UE;
wherein, a Time Division Duplex - Uplink - Downlink - Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources.

14. The method according to claim 13, wherein the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
and/or
the eighth parameter includes an eleventh parameter, which represents: configuring certain symbols specified in a DL slot and/or S slot in the TDD frame structure as first SBFD symbols;
and/or
the eighth parameter includes a twelfth parameter, which represents: configuring certain symbols specified in a UL slot and/or S slot in the TDD frame structure as second SBFD symbols.

15. The method according to claim 14, wherein in the presence of a sixth parameter and/or a seventh parameter, configuration of a slot by the eighth parameter complies with a rule specified by the sixth parameter and/or the seventh parameter;
and/or
a part where the first SBFD symbol coincides with the second SBFD symbol in a same slot is configured according to the first SBFD symbol.

16. The method according to claim 14, wherein the eleventh parameter includes: a position of a starting symbol in the DL slot and/or S slot among the specified certain symbols, a length of the specified certain symbols, the eleventh parameter is invalid for the configuration of symbols beyond the slot;
and/or
the twelfth parameter includes: a position of a starting symbol in the UL slot and/or S slot among the specified certain symbols, the length of the specified certain symbols, the twelfth parameter is invalid for the configuration of symbols beyond the slot.

17. The method according to claim 13, wherein the method further comprises:
sending a third RRC signaling to the UE, the third RRC signaling including a thirteenth parameter; the thirteenth parameter is to control the UE to revert the configuration of a time domain resource to prior to receiving the second RRC signaling;
and/or
sending a fourth RRC signaling to the UE, the fourth RRC signaling including a fourteenth parameter; the fourteenth parameter is to control the UE to revert the configuration of a time domain resource to prior to configuring an SBFD time domain resource.

18. A time domain resource configuration method, wherein it is applied to a user equipment UE, and the method comprises:
receiving a first radio resource control RRC signaling sent by a base station;
wherein a Time Division Duplex - UpLink - DownLink - Common Configuration TDD-UL-DL-ConfigCommon in the first RRC signaling comprises: a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter representing a period of the SBFD time domain resource, the second parameter representing a time-domain position of the SBFD time domain resource in the TDD frame structure or the TDD frame structure pattern;
configuring the TDD frame structure and the SBFD time domain resource according to the TDD frame structure pattern, the SBFD pattern, the first parameter and the second parameter.

19. The method according to claim 18, wherein the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
or
the TDD-UL-DL-ConfigCommon includes one SBFD pattern and two TDD frame structure patterns, the SBFD pattern corresponding to the two TDD frame structure patterns, and the SBFD pattern is to configure the SBFD time domain resource, the period represented by the first parameter being: a third integer multiple of a sum of periods configured in the two TDD frame structure patterns.

20. The method according to claim 18, wherein the first parameter is in the form of: a value of the period or a specific value of a multiple between the period and a TDD frame structure period.

21. The method according to claim 18, wherein the second parameter represents a time-domain position of one or two SBFD time domain resources in the TDD frame structure or the TDD frame structure pattern.

22. The method according to claim 21, wherein the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource;
or, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern; in the case where one SBFD pattern corresponds to two TDD frame structure patterns, the fifth parameter represents a position of an ending symbol of the SBFD time domain resource in the TDD frame structure.

23. The method according to claim 22, wherein the second parameter comprises a third parameter of one SBFD time domain resource;
or
the second parameter includes a third parameter of a first SBFD time domain resource and a second SBFD time domain resource, wherein the first SBFD time domain resource is located before the second SBFD time domain resource.

24. The method according to claim 21, wherein the second parameter represents time-domain positions of a first SBFD time domain resource and a second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

25. The method according to claim 21, wherein the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that coincides with a traditional Uplink UL symbol is invalid;
and/or
in the case where the TDD-UL-DL-ConfigCommon includes a sixth parameter, the sixth parameter represents whether a first symbol in a first SBFD time domain resource that coincides with a traditional DL symbol or a traditional F symbol is invalid; in the case where a sixth parameter is not included in the TDD-UL-DL-ConfigCommon, a first symbol that coincides with the traditional Downlink DL symbol or the traditional Flexible F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure.

26. The method according to claim 25, wherein in the case where the sixth parameter takes the value of a first value, the first symbol that coincides with the traditional DL symbol is valid, and the first symbol that coincides with the traditional F symbol is invalid;
in the case where the sixth parameter takes the value of a second value, the first symbol that coincides with the traditional DL symbol is invalid, and the first symbol that coincides with the traditional F symbol is valid.

27. The method according to claim 21, wherein the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that coincides with a traditional DL symbol is invalid;
and/or
in the case where the TDD-UL-DL-ConfigCommon includes a seventh parameter, the seventh parameter represents whether a second symbol in a second SBFD time domain resource that coincides with a traditional UL symbol or a traditional F symbol is invalid; in the case where a seventh parameter is not included in the TDD-UL-DL-ConfigCommon, a second symbol that coincides with a traditional UL symbol or a traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure.

28. The method according to claim 27, wherein in the case where the seventh parameter takes the value of a third value, the second symbol that coincides with the traditional UL symbol is valid, and the second symbol that coincides with the traditional F symbol is invalid;
in the case where the seventh parameter takes the value of a fourth value, the second symbol that coincides with the traditional UL symbol is invalid, and the second symbol that coincides with the traditional F symbol is valid.

29. The method according to claim 18, wherein if the TDD-UL-DL-ConfigCommon includes one SBFD pattern and two TDD frame structure patterns, the SBFD time domain resource represented by the second parameter is within the range of the TDD frame structure configured by the two TDD frame structure patterns;
if the SBFD pattern contained in the TDD-UL-DL-ConfigCommon corresponds one-to-one to the TDD frame structure pattern, the SBFD time domain resource represented by the second parameter is within the range of the TDD frame structure pattern.

30. The method according to any one of claims 18-29, wherein the method further comprises:
receiving a second RRC signaling sent by the base station;
wherein, a Time Division Duplex - Uplink - Downlink - Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources;
according to the eighth parameter, configuring the SBFD symbols.

31. The method according to claim 30, wherein the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
and/or
the eighth parameter includes an eleventh parameter, which represents: configuring certain symbols specified in a DL slot and/or S slot in the TDD frame structure as the first SBFD symbols;
and/or
the eighth parameter includes a twelfth parameter, which represents: configuring certain symbols specified in a UL slot and/or S slot in the TDD frame structure as the second SBFD symbols.

32. The method according to claim 31, wherein in the presence of a sixth parameter and/or a seventh parameter, the configuration of a slot by the eighth parameter complies with a rule specified by the sixth parameter and/or the seventh parameter;
and/or
the part where the first SBFD symbol coincides with the second SBFD symbol in the same slot is configured according to the first SBFD symbol.

33. The method according to claim 31, wherein the eleventh parameter includes: a position of a starting symbol in the DL slot and/or S slot among the specified certain symbols, a length of the specified certain symbols, the eleventh parameter is invalid for the configuration of symbols beyond the slot;
and/or
the twelfth parameter includes: a position of a starting symbol in the UL slot and/or S slot among the specified certain symbols, a length of the specified certain symbols, the twelfth parameter is invalid for the configuration of symbols beyond the slot.

34. The method according to claim 30, wherein the method further comprises:
receiving a third RRC signaling sent by the base station, which includes a thirteenth parameter; based on the thirteenth parameter, reverting the configuration of a time domain resource to prior to receiving the second RRC signaling;
and/or
receiving a fourth RRC signaling sent by the base station, which includes a fourteenth parameter; based on the fourteenth parameter, reverting the configuration of a time domain resource to prior to configuring an SBFD time domain resource.

35. The method according to claim 18, wherein the UE ignores a configuration related to SBFD in SFI;
or
the UE configures an SBFD symbol according to SFI, and ignores an SBFD symbol configuration with respect to a UL symbol by SFI.

36. A base station, wherein the base station comprises:
a processor;
a transceiver;
a machine readable storage medium, which stores machine executable instructions that can be executed by the processor; the machine executable instructions cause the processor to perform:
sending a first radio resource control RRC signaling to a user equipment UE;
wherein a Time Division Duplex - UpLink - DownLink - Common Configuration TDD-UL-DL-ConfigCommon in the first RRC signaling includes a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter representing a period of the SBFD time domain resource, and the second parameter representing a time-domain position of the SBFD time domain resource in the TDD frame structure or the TDD frame structure pattern.

37. The base station according to claim 36, wherein the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
or
the TDD-UL-DL-ConfigCommon includes one SBFD pattern and two TDD frame structure patterns, the SBFD pattern corresponding to the two TDD frame structure patterns, and the SBFD pattern is to configure the SBFD time domain resource, and the period represented by in the first parameter is: a third integer multiple of a sum of periods configured in the two TDD frame structure patterns.

38. The base station according to claim 36, wherein the first parameter is in the form of: a value of the period or a specific value of a multiple between the period and a TDD frame structure period.

39. The base station according to claim 36, wherein the second parameter represents a time-domain position of one or two SBFD time domain resources in the TDD frame structure or the TDD frame structure pattern.

40. The base station according to claim 39, wherein the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource;
or, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern; in the case where one SBFD pattern corresponds to two TDD frame structure patterns, the fifth parameter represents a position of an ending symbol of the SBFD time domain resource in the TDD frame structure.

41. The base station according to claim 40, wherein the second parameter comprises a third parameter of an SBFD time domain resource;
or
the second parameter includes a third parameter of a first SBFD time domain resource and a second SBFD time domain resource, wherein the first SBFD time domain resource is located before the second SBFD time domain resource.

42. The base station according to claim 39, wherein the second parameter represents time-domain positions of a first SBFD time domain resource and a second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

43. The base station according to claim 39, wherein the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that coincides with a traditional Uplink UL symbol is invalid;
and/or
in the case where the TDD-UL-DL-ConfigCommon includes a sixth parameter, the sixth parameter represents whether a first symbol in a first SBFD time domain resource that coincides with a traditional Downlink DL symbol or traditional Flexible F symbol is invalid; in the case where a sixth parameter is not included in the TDD-UL-DL-ConfigCommon, a first symbol that coincides with the traditional DL symbol or the traditional F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure.

44. The base station according to claim 43, wherein in the case where the sixth parameter takes the value of a first value, the first symbol that coincides with the traditional DL symbol is valid, and the first symbol that coincides with the traditional F symbol is invalid;
in the case where the sixth parameter takes the value of a second value, the first symbol that coincides with the traditional DL symbol is invalid, and the first symbol that coincides with the traditional F symbol is valid.

45. The base station according to claim 39, wherein the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that overlaps with a traditional DL symbol is invalid;
and/or
in the case where the TDD-UL-DL-ConfigCommon includes a seventh parameter, the seventh parameter represents whether a second symbol in a second SBFD time domain resource that coincides with a traditional UL symbol or a traditional F symbol is invalid; in the case where a seventh parameter is not included in the TDD-UL-DL-ConfigCommon, a second symbol that coincides with a traditional UL symbol or a traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure.

46. The base station according to claim 45, wherein in the case where the seventh parameter takes the value of a third value, the second symbol that coincides with the traditional UL symbol is valid, and the second symbol that coincides with the traditional F symbol is invalid;
in the case where the seventh parameter takes the value of a fourth value, the second symbol that coincides with the traditional UL symbol is invalid, and the second symbol that coincides with the traditional F symbol is valid.

47. The base station according to claim 36, wherein if the TDD-UL-DL-ConfigCommon includes one SBFD pattern and two TDD frame structure patterns, the SBFD time domain resource represented by the second parameter is within the range of the TDD frame structure configured by the two TDD frame structure patterns;
if the SBFD pattern contained in the TDD-UL-DL-ConfigCommon corresponds one-to-one to the TDD frame structure pattern, the SBFD time domain resource represented by the second parameter is within the range of the TDD frame structure pattern.

48. The base station according to any of claims 36-47, wherein the machine executable instructions also cause the processor to perform:
sending a second RRC signaling to the UE;
wherein, a Time Division Duplex - Uplink - Downlink - Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources.

49. The base station according to claim 48, wherein the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
and/or
the eighth parameter includes an eleventh parameter, which represents: configuring certain symbols specified in a DL slot and/or S slot in the TDD frame structure as the first SBFD symbols;
and/or
the eighth parameter includes a twelfth parameter, which represents: configuring certain symbols specified in a UL slot and/or S slot in the TDD frame structure as the second SBFD symbols.

50. The base station according to claim 49, wherein in the presence of a sixth parameter and/or a seventh parameter, the configuration of a slot by the eighth parameter complies with a rule specified by the sixth parameter and/or the seventh parameter;
and/or
the part where the first SBFD symbol coincides with the second SBFD symbol in the same slot is configured according to the first SBFD symbol.

51. The base station according to claim 49, wherein the eleventh parameter includes: a position of a starting symbol in the DL slot and/or S slot among the specified certain symbols, a length of the specified certain symbols, the eleventh parameter is invalid for the configuration of symbols beyond the slot;
and/or
the twelfth parameter includes: a position of a starting symbol in the UL slot and/or S slot among the specified certain symbols, a length of the specified certain symbols, the twelfth parameter is invalid for the configuration of symbols beyond the slot.

52. The base station according to claim 48, wherein the machine executable instructions also cause the processor to perform:
sending a third RRC signaling to the UE, the third RRC signaling including a thirteenth parameter; the thirteenth parameter is to control the UE to revert the configuration of a time domain resource to prior to receiving the second RRC signaling;
and/or
sending a fourth RRC signaling to the UE, the fourth signaling including a fourteenth parameter; the fourteenth parameter is to control the UE to revert the configuration of a time domain resource to prior to configuring an SBFD time domain resource.

53. A user terminal UE, wherein the UE comprises:
a processor;
a transceiver;
a machine readable storage medium, which stores machine executable instructions that can be executed by the processor; the machine executable instructions cause the processor to perform:
receiving a first radio resource control RRC signaling sent by a base station;
wherein a Time Division Duplex - UpLink - DownLink - Common Configuration TDD-UL-DL-ConfigCommon in the first RRC signaling comprises: a Time Division Duplexing TDD frame structure pattern and a Sub-Band Full Duplex SBFD pattern, the TDD frame structure pattern is to configure a TDD frame structure, and the SBFD pattern is to configure an SBFD time domain resource and carries a first parameter and a second parameter, the first parameter representing a period of the SBFD time domain resource, the second parameter representing a time-domain position of the SBFD time domain resource in the TDD frame structure or the TDD frame structure pattern;
configuring the TDD frame structure and SBFD time domain resource according to the TDD frame structure pattern, SBFD pattern, first parameter and second parameter.

54. The UE according to claim 53, wherein the TDD-UL-DL-ConfigCommon comprises one TDD frame structure pattern and one SBFD pattern that correspond to each other, and the period represented by the first parameter is: a first integer multiple of a period configured in the TDD frame structure pattern;
or
the TDD-UL-DL-ConfigCommon comprises two TDD frame structure patterns and two SBFD patterns in one-to-one correspondence, and the period represented by the first parameter is: a second integer multiple of a sum of periods configured in the two TDD frame structure patterns;
or
the TDD-UL-DL-ConfigCommon includes one SBFD pattern and two TDD frame structure patterns, the SBFD pattern corresponding to the two TDD frame structure patterns, and the SBFD pattern is to configure the SBFD time domain resource, and the period represented by the first parameter is: a third integer multiple of a sum of periods configured in the two TDD frame structure patterns.

55. The UE according to claim 53, wherein the first parameter is in the form of: a value of the period or a specific value of a multiple between the period and a TDD frame structure period.

56. The UE according to claim 53, wherein the second parameter represents a time-domain position of one or two SBFD time domain resources in the TDD frame structure or the TDD frame structure pattern.

57. The UE according to claim 56, wherein the second parameter includes: a third parameter and a fourth parameter; in the case where the TDD frame structure pattern corresponds one-to-one to the SBFD pattern, the third parameter represents a position of a starting symbol of the SBFD time domain resource in the TDD frame structure pattern; in the case where one SBFD pattern corresponds to two TDD frame structure patterns, the third parameter represents a position of a starting symbol of the SBFD time domain resource in the TDD frame structure; the fourth parameter is a symbol length of the SBFD time domain resource;
or, the second parameter includes: a third parameter and a fifth parameter; in the case where the TDD frame structure pattern corresponds one-to-one to the SBFD pattern, the fifth parameter represents a position of an ending symbol of the SBFD time domain resource in the TDD frame structure pattern; in the case where one SBFD pattern corresponds to two TDD frame structure patterns, the fifth parameter represents a position of an ending symbol of the SBFD time domain resource in the TDD frame structure.

58. The UE according to claim 57, wherein the second parameter comprises a third parameter of an SBFD time domain resource;
or
the second parameter includes a third parameter of a first SBFD time domain resource and a second SBFD time domain resource, wherein the first SBFD time domain resource is located before the second SBFD time domain resource.

59. The UE according to claim 56, wherein the second parameter represents time-domain positions of a first SBFD time domain resource and the second SBFD time domain resource in the TDD frame structure pattern or the TDD frame structure, respectively, with the first SBFD time domain resource located before the second SBFD time domain resource;
if the first SBFD time domain resource overlaps with the second SBFD time domain resource, a priority of the first SBFD time domain resource in an overlapping part is higher than that of the second SBFD time domain resource.

60. The UE according to claim 56, wherein the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the first SBFD time domain resource that coincides with a traditional Uplink UL symbol is invalid;
and/or
in the case where the TDD-UL-DL-ConfigCommon includes a sixth parameter, the sixth parameter represents whether a first symbol in a first SBFD time domain resource that coincides with a traditional DL symbol or a traditional F symbol is invalid; in the case where a sixth parameter is not included in the TDD-UL-DL-ConfigCommon, a first symbol that coincides with a traditional Downlink DL symbol or a traditional Flexible F symbol is valid;
the traditional UL symbol is a UL symbol contained in the TDD frame structure, the traditional DL symbol is a DL symbol contained in the TDD frame structure, and the traditional F symbol is an F symbol contained in the TDD frame structure.

61. The UE according to claim 60, wherein in the case where the sixth parameter takes the value of a first value, the first symbol that coincides with the traditional DL symbol is valid, and the first symbol that coincides with the traditional F symbol is invalid;
in the case where the sixth parameter takes the value of a second value, the first symbol that coincides with the traditional DL symbol is invalid, and the first symbol that coincides with the traditional F symbol is valid.

62. The UE according to claim 56, wherein the second parameter represents time-domain positions of a first SBFD time domain resource and a second SBFD time domain resource in the TDD frame structure pattern or the TDD frame structure, with the first SBFD time domain resource located before the second SBFD time domain resource;
a symbol in the second SBFD time domain resource that coincides with a traditional DL symbol is invalid;
and/or
in the case where the TDD-UL-DL-ConfigCommon includes a seventh parameter, the seventh parameter represents whether a second symbol in the second SBFD time domain resource that coincides with a traditional UL symbol or traditional F symbol is invalid; in the case where a seventh parameter is not included in the TDD-UL-DL-ConfigCommon, a second symbol that coincides with either the traditional UL symbol or the traditional F symbol is valid;
the traditional DL symbol is a DL symbol contained in the TDD frame structure, the traditional UL symbol is a UL symbol contained in the TDD frame structure, and the traditional F symbol is an F symbol contained in the TDD frame structure.

63. The UE according to claim 62, wherein in the case where the seventh parameter takes the value of a third value, the second symbol that coincides with the traditional UL symbol is valid, and the second symbol that coincides with the traditional F symbol is invalid;
in the case where the seventh parameter takes the value of a fourth value, the second symbol that coincides with the traditional UL symbol is invalid, and the second symbol that coincides with the traditional F symbol is valid.

64. The UE according to claim 53, wherein if the TDD-UL-DL-ConfigCommon includes one SBFD pattern and two TDD frame structure patterns, the SBFD time domain resource represented by the second parameter is within the range of the TDD frame structure configured by the two TDD frame structure patterns;
if the SBFD pattern contained in the TDD-UL-DL-ConfigCommon corresponds one-to-one to the TDD frame structure pattern, the SBFD time domain resource represented by the second parameter is within the range of the TDD frame structure pattern.

65. The UE according to any of claims 53-64, wherein the machine executable instructions also cause the processor to perform:
receiving a second RRC signaling sent by the base station;
wherein, a Time Division Duplex - Uplink - Downlink - Dedicated Configuration TDD-UL-DL-ConfigDedicated in the second RRC signaling includes an eighth parameter, which is to configure symbols in certain slots of the TDD frame structure as SBFD symbols, the SBFD symbols having SBFD sub-band resources;
according to the eighth parameter, configuring the SBFD symbols.

66. The UE according to claim 65, wherein the eighth parameter includes a ninth parameter, which represents: configuring all symbols in a specified DL slot and/or S slot in the TDD frame structure as first SBFD symbols;
and/or
the eighth parameter includes a tenth parameter, which represents: configuring all symbols in a specified UL slot and/or S slot in the TDD frame structure as second SBFD symbols;
and/or
the eighth parameter includes an eleventh parameter, which represents: configuring certain symbols specified in a DL slot and/or S slot in the TDD frame structure as first SBFD symbols;
and/or
the eighth parameter includes a twelfth parameter, which represents: configuring certain symbols specified in a UL slot and/or S slot in the TDD frame structure as second SBFD symbols.

67. The UE according to claim 66, wherein in the presence of a sixth parameter and/or a seventh parameter, the configuration of a slot by the eighth parameter complies with a rule specified by the sixth parameter and/or the seventh parameter;
and/or
the part where the first SBFD symbol coincides with the second SBFD symbol in a same slot is configured according to the first SBFD symbol.

68. The UE according to claim 66, wherein the eleventh parameter includes: a position of a starting symbol in the DL slot and/or S slot among the specified certain symbols, a length of the specified certain symbols, the eleventh parameter is invalid for the configuration of symbols beyond the slot;
and/or
the twelfth parameter includes: a position of a starting symbol in the UL slot and/or S slot among the specified certain symbols, a length of the specified certain symbols, the twelfth parameter is invalid for the configuration of symbols beyond the slot.

69. The UE according to claim 65, wherein the machine executable instructions also cause the processor to perform:
receiving a third RRC signaling sent by the base station, which includes a thirteenth parameter; based on the thirteenth parameter, reverting the configuration of a time domain resource to prior to receiving the second RRC signaling;
and/or
receiving a fourth RRC signaling sent by the base station, which includes a fourteenth parameter; based on the fourteenth parameter, reverting the configuration of a time domain resource to prior to configuring an SBFD time domain resource.

70. The UE according to claim 53, wherein the UE ignores a configuration related to SBFD in SFI;
or
the UE configures an SBFD symbol according to SFI, and ignores an SBFD symbol configuration with respect to a UL symbol by SFI.

71. A machine readable storage medium, wherein it stores machine executable instructions that, when called and executed by a processor, cause the processor to: implement the method according to any one of claims 1-17 or 18-35.

72. A computer program product, wherein the computer program product causes a processor to implement the method according to any one of claims 1-17 or 18-35.
